# EUROPÄISCHE PATENTSCHRIFT

(11) **EP 3 022 242 B1**
(45) Veröffentlichungstag und Bekanntmachung des Hinweises auf die Patenterteilung: **01.01.2020**
(21) Anmeldenummer: 14727833.7
(22) Anmeldetag: 04.06.2014
(51) Int. Cl.: C08G 18/48, C08G 18/66, C08G 18/75, C08G 18/76, C08G 18/81, C08F 290/06, C08G 18/08, C08G 18/10, C08G 18/32, C08G 18/34, C08G 18/42, C08F 283/00, C09D 175/06, C09D 175/08

(54) **WÄSSRIGE DISPERSION EINES MISCHPOLYMERISATS**
AQUEOUS DISPERSION OF A MIXED POLYMERISATE
DISPERSION AQUEUSE D'UN POLYMÈRE MIXTE

(30) Priorität: 17.07.2013 EP 13176912
(43) Veröffentlichungstag der Anmeldung: 25.05.2016
(73) Patentinhaber: BASF Coatings GmbH, 48165 Münster (DE)
(72) Erfinder: REUTER, Hardy, 48167 Münster (DE); STEINMETZ, Bernhard, 97535 Rütschenhausen (DE); BLOHM, Matthias, 48165 Münster (DE); TEICHMANN, Carsten, 48249 Dülmen (DE); GÖB, Bianca, 97440 Werneck (DE)
(74) Vertreter: BASF IP Association
(86) Internationale Anmeldenummer: PCT/EP2014/061551
(87) Internationale Veröffentlichungsnummer: WO 2015/007427

(56) Entgegenhaltungen:
- EP-A2- 1 185 568
- WO-A1-01/25307
- WO-A1-03/025041

## Beschreibung

Die vorliegende Erfindung betrifft wässrige Dispersionen von Mischpolymerisaten, sowie deren Herstellung und Verwendung, insbesondere auf dem Gebiet der Automobillackierung.

Aus dem Stand der Technik sind Mischpolymerisate bekannt, die einen Kern-Schale-Aufbau haben.

Das Dokument EP 1 218 434 B1 offenbart ein Pfropfmischpolymerisat auf Polyurethan-Basis sowie dessen Verwendung zur Herstellung von Beschichtungsstoffen, Klebstoffen und Dichtmassen.

Die Dokumente EP 1 185 568 B1 und EP 1 173 491 B1 beschreiben Mischpolymerisate mit einem Kern-Schale-Aufbau, deren Äußeres vollständig vernetzt ist, wobei der Kern aus Polyacrylat besteht und die Schale aus Polyurethan bestehen kann.

Das Dokument EP 1 330 480 B1 beschreibt Mischpolymerisate, wobei der Kern aus sulfidgruppenhaltigen Polyurethanen besteht und die Schale aus Polyacrylat.

Die aus dem Stand der Technik bekannten Mischpolymerisate liegen als wässrige Dispersion vor und können für die Herstellung wässriger Beschichtungsstoffe, insbesondere für Wasserbasislacke, verwendet werden.

Diese Wasserbasislacke können im so genannten Basecoat/Clearcoat-Verfahren, einem Nass-in-Nassverfahren für die farb- und/oder effektgebende Schicht einer Mehrschichtlackierung verwendet werden.

Die bekannten Verfahren sind insbesondere im Hinblick auf das Auftreten von, als kleinste Löcher in Klar- und Basislackschicht sichtbaren, Nadelstichen verbesserungsbedürftig. Auch das Schleifriefenabdeckungsvermögen und die Haftung bei mehrfacher Lackierung sind bei aus dem Stand der Technik bekannten Beschichtungen nicht ausreichend.

Die der vorliegenden Erfindung zu Grunde liegende Aufgabenstellung besteht somit in der Bereitstellung einer wässrigen Dispersion eines Mischpolymerisats der oben beschriebenen Art, welches für das Bindemittel der farb- und/oder effektgebenden Schicht einer Mehrschichtlackierung verwendet werden kann, welche gegenüber dem Stand der Technik verbessert ist.

Insbesondere soll diese keine oder nur sehr wenige Nadelstiche und/oder eine erhöhte Nadelstichgrenze aufweisen. Als Nadelstichgrenze wird die Trockenschichtdicke der Basislackschicht bezeichnet, ab der Nadelstiche auftreten. Zugleich soll das Schleifriefenabdeckungsvermögen und die Haftung bei mehrfacher Lackierung, z.B. als Reparaturlackierung, verbessert werden.

Überraschenderweise hat sich gezeigt, dass die komplexe Aufgabenstellung, die dieser Erfindung zugrunde liegt, durch Bereitstellung
einer wässrigen Dispersion, enthaltend mindestens ein Mischpolymerisat, wobei das Mischpolymerisat herstellbar ist, durch
(i) Vorlage einer wässrigen Dispersion mindestens eines Polyurethans, und anschließend
(ii) Polymerisation einer Mischung von olefinisch ungesättigten Monomeren in Gegenwart des Polyurethans aus (i),
   wobei
   (a) ein wasserlöslicher Initiator verwendet wird,
   (b) die Zudosierung der olefinisch ungesättigten Monomere so erfolgt, dass in der Reaktionslösung eine Konzentration von 6,0 Gew.-%, bezogen auf die Gesamtmenge an olefinisch ungesättigten Monomeren, während der gesamten Reaktionsdauer nicht überschritten wird, und
   (c) die Mischung der olefinisch ungesättigten Monomere mindestens ein mehrfach olefinisch ungesättigtes Monomer enthält,
gelöst wird.

Die Erfindung betrifft auch ein Verfahren zur Herstellung der erfindungsgemäßen Dispersionen, die Verwendung der genannten wässrigen Dispersion in Lacken insbesondere Basislacken, wässrige Basislacke, die oben genannte Dispersionen enthalten, sowie ein Verfahren zur Herstellung von mehrschichtigen Lackierungen.

Nadelstiche sind kleinste Löcher in der Klar- und Basislackschicht, welche in der fertigen Beschichtung sichtbar sind. Sie gehören zu den verbreitetsten Oberflächenstörungen in Spritzlacken. Die in der nachfolgenden Beschreibung und Patentbeispielen als Nadelstiche bezeichnete Defekte werden charakterisiert durch trichterförmige, sich in zylindrischen Röhren fortsetzende Löcher in der Größenordnung eines Abdrucks einer Nadelspitze, welche einen mittleren Durchmessers der Trichteröffnung von ca. 300 bis 700 µm und einen mittleren Röhrendurchmessers von ca. 15 bis 60 µm aufweisen, und durch Klar- und Basislackschicht bis zur darunterliegenden Schicht hindurchreichen. Sie können das Ergebnis von entweichenden Gasen, wie Lufteinschlüssen - bzw. verdampfenden Flüssigkeiten sein.

Der Begriff "(Meth)Acrylat" soll im Folgenden sowohl Acrylat als auch Methacrylat bezeichnen.

Ein Mischpolymerisat im Sinne der vorliegenden Erfindung bezeichnet Polymerteilchen, die aus verschiedenen Polymeren aufgebaut sind. Es sind dabei ausdrücklich sowohl Polymere eingeschlossen, welche kovalent aneinander gebunden sind, als auch solche, bei denen die verschiedenen Polymere durch Adhäsion aneinander gebunden sind. Auch Kombinationen von beiden Arten der Bindung sind von dieser Definition erfasst.

Die erfindungsgemäßen Dispersionen sowie das Verfahren zur Herstellung eben dieser Dispersionen sind durch ihre Herstellungsschritte charakterisiert.

In einem ersten Herstellungsschritt wird eine wässrige Dispersion eines Polyurethanharzes vorgelegt.

Geeignete gesättigte oder ungesättigte Polyurethanharze werden beispielsweise beschrieben in
- der deutschen Patentanmeldung DE 199 48 004 A1, Seite 4, Zeile 19 bis Seite 11 Zeile 29 (Polyurethanpräpolymer B1)
- der europäischen Patentanmeldung EP 0 228 003 A1, Seite 3, Zeile 24 bis Seite 5, Zeile 40,
- der europäischen Patentanmeldung EP 0 634 431 A1, Seite 3, Zeile 38 bis Seite 8, Zeile 9, oder
- der internationalen Patentanmeldung WO 92/15405, Seite 2, Zeile 35 bis Seite 10, Zeile 32.

Für die Herstellung des Polyurethanharzes werden vorzugsweise die dem Fachmann bekannten aliphatischen, cycloaliphatischen, aliphatisch-cycloaliphatischen, aromatischen, aliphatisch-aromatischen und/oder cycloaliphatisch-aromatischen Polyisocyanate eingesetzt. Besonders bevorzugt sind aliphatische und aliphatischcycloaliphatische Polyurethanharze.

Als Alkohol-Komponente für die Herstellung der Polyurethanharze werden bevorzugt die dem Fachmann bekannten, gesättigten und ungesättigten Polyole sowie gegebenenfalls in untergeordneten Mengen auch Monoalkohole eingesetzt. Es werden insbesondere Diole und gegebenenfalls in untergeordneten Mengen Triole zur Einführung von Verzweigungen eingesetzt. Beispiele geeigneter Polyole sind gesättigte oder olefinisch ungesättigte Polyesterpolyole und/oder Polyetherpolyole. Insbesondere werden als Polyole Polyesterpolyole, insbesondere solche mit einem zahlenmittleren Molekulargewicht von 400 bis 5000 g/mol (gemessen mittels Dampfdruckosmometrie), eingesetzt

Bevorzugt handelt es sich bei dem in wässriger Dispersion vorgelegten Polyurethan um ein hydrophil stabilisiertes Polyurethan. Zur hydrophilen Stabilisierung beziehungsweise zur Erhöhung der Dispergierbarkeit in wässrigem Medium kann das Polyurethanharz bestimmte ionische Gruppen und/oder Gruppen, die in ionische Gruppen überführt werden können (potentiell ionische Gruppen), enthalten. Solche Polyurethanharze werden im Rahmen der vorliegenden Erfindung als ionisch hydrophil stabilisierte Polyurethanharze bezeichnet. Ebenfalls enthalten sein können nicht ionische hydrophil modifizierende Gruppen. Bevorzugt sind aber die ionisch hydrophil stabilisierten Polyurethane. Genauer handelt es sich bei den modifizierenden Gruppen entweder um
- funktionelle Gruppen, die durch Neutralisationsmittel und/oder Quaternisierungsmittel in Kationen überführt werden können, und/oder kationische Gruppen (kationische Modifizierung)
   oder
- funktionelle Gruppen, die durch Neutralisationsmittel in Anionen überführt werden können, und/oder anionische Gruppen (anionische Modifizierung)
   oder
- nicht ionische hydrophile Gruppen (nicht-ionische Modifizierung)
   oder
- Kombinationen der zuvor genannten Gruppen.

Wie der Fachmann weiß, handelt es sich bei den funktionellen Gruppen zur kationischen Modifizierung um beispielsweise primäre, sekundäre und/oder tertiäre Aminogruppen, sekundäre Sulfidgruppen und/oder tertiäre Phosphingruppen, insbesondere tertiäre Aminogruppen und sekundäre Sulfidgruppen (funktionelle Gruppen, die durch Neutralisationsmittel und/oder Quaternisierungsmittel in kationische Gruppen überführt werden können). Weiterhin zu nennen sind die aus den vorgenannten funktionellen Gruppen unter Einsatz von dem Fachmann bekannten Neutralisationsmitteln und/oder Quaternisierungsmitteln hergestellte kationische Gruppen wie primäre, sekundäre, tertiäre und/oder quaternäre Ammoniumgruppen, tertiäre Sulfoniumgruppen und/oder quaternäre Phosphoniumgruppen, insbesondere quaternäre Ammoniumgruppen und tertiäre Sulfoniumgruppen.

Bei den funktionellen Gruppen zur anionischen Modifizierung handelt es sich bekanntermaßen um beispielsweise Carbonsäure-, Sulfonsäure- und/oder Phosphonsäuregruppen, insbesondere Carbonsäuregruppen (funktionelle Gruppen, die durch Neutralisationsmittel in anionische Gruppen überführt werden können) sowie aus den vorgenannten funktionellen Gruppen unter Einsatz von dem Fachmann bekannten Neutralisationsmittel hergestellte anionische Gruppen wie Carboxylat-, Sulfonat- und/oder Phosphonatgruppen.

Bei den funktionellen Gruppen zur nicht-ionischen hydrophilen Modifizierung handelt es sich vorzugsweise um Poly(oxyalkylen)-Gruppen, insbesondere Poly(oxyethylen)-Gruppen.

Die ionisch hydrophilen Modifizierungen können durch Monomere, welche die ionischen oder potentiell ionischen Gruppen enthalten, in das Polyurethanharz eingeführt werden. Die nicht-ionischen Modifizierungen werden beispielsweise durch den Einbau von Poly(ethylen)oxid-Polymeren als laterale oder endständige Gruppen der Polyurethanmoleküle eingeführt. Die hydrophilen Modifizierungen werden beispielsweise über Verbindungen eingeführt, die mindestens eine gegenüber Isocyanatgruppen reaktive Gruppe, vorzugsweise mindestens eine Hydroxygruppe, enthalten. Zur Einführung der ionischen Modifizierung können Monomere eingesetzt werden, die neben den modifizierenden Gruppen mindestens eine Hydroxygruppe enthalten. Zur Einführung der nicht-ionischen Modifizierungen werden bevorzugt die dem Fachmann bekannten Polyetherdiole und/oder Alkoxypoly(oxyalkylen)alkohole eingesetzt.

Bevorzugt wird mindestens ein Lösemittel zu der vorgelegten Polyurethandispersion gegeben, wobei das Lösemittel in jedem Verhältnis mit Wasser und in jedem Verhältnis mit der Mischung von olefinisch ungesättigten Monomeren mischbar ist. Besonders geeignete Lösemittel sind N-Methylpyrrolidon, N-Ethylpyrrolidon und Etheralkohole, wie insbesondere Methoxypropanol.

Als nächster Herstellungsschritt wird eine Polymerisation einer Mischung von olefinisch ungesättigten Monomeren in Gegenwart des Polyurethans nach den Methoden der sogenannten radikalischen Emulsionspolymerisationen in Gegenwart mindestens eines Polymerisationsinitiators durchgeführt.

Bei dem verwendeten Polymerisationsinitiator muss es sich um einen wasserlöslichen Initiator handeln. Beispiele geeigneter Initiatoren sind Kalium-, Natrium- oder Ammoniumperoxodisulfat, sowie Wasserstoffperoxid, tert.-Butylhydroperoxid, 2,2'-Azobis(2-amidoisopropan)dihydrochlorid, 2,2'-Azo- bis-(N,N'-dimethylenisobutyramidin)dihydrochlorid oder 2,2'-Azo- bis-(4-cyanopentansäure. Die Initiatoren werden entweder allein oder in Mischung verwendet, z. B. Mischungen aus Wasserstoffperoxid und Natriumpersulfat.
Auch die bekannten Redox-Initiatorsysteme können als Polymerisationinitiatoren verwendet werden. Solche Redox-Initiatorsysteme enthalten mindestens eine peroxidhaltige Verbindung in Kombination mit einem Redox-Coinitiator z. B. reduzierend wirkenden Schwefelverbindungen, beispielsweise Bisulfite, Sulfite, Thiosulfate, Dithionite oder Tetrathionate von Alkalimetallen und Ammoniumverbindungen, Natriumhydroxymethansulfinat-Dihydrat und/oder Thioharnstoff. So kann man Kombinationen von Peroxodisulfaten mit Alkalimetall- oder Ammoniumhydrogensulfiten einsetzen, z. B. Ammoniumperoxidisulfat und Ammoniumdisulfit. Das Gewichtsverhältnis von peroxidhaltigen Verbindungen zu den Redox-Coinitiatoren beträgt vorzugsweise 50 : 1 bis 0,05 : 1. In Kombination mit den Initiatoren bzw. den Redoxinitiatorsystemen können zusätzlich Übergangsmetallkatalysatoren eingesetzt werden, wie z. B. Eisen-, Nickel-, Kobalt-, Mangan-, Kupfer-, Vanadium, oder Chromsalze, wie Eisen-II-sulfat, Kobalt- II-chlorid, Nickel-II-sulfat, Kupfer-I-chlorid, Mangan-II-acetat, Vanadium-III-acetat, Mangan-II-chlorid. Bezogen auf die Monomere werden diese Übergangsmetallsalze üblicherweise in Mengen von 0,1 bis 1000 ppm eingesetzt. So kann man Kombinationen von Wasserstoffperoxid mit Eisen-II-Salzen einsetzen, wie beispielsweise 0,5 bis 30% Wasserstoffperoxid und 0,1 bis 500 ppm Mohrsches Salz.
Die Initiatoren werden bevorzugt in einer Menge von 0,05 bis 20 Gew.-%, bevorzugt 0,05 bis 10, besonders bevorzugt von 0,1 bis 5 Gew.-% bezogen auf das Gesamtgewicht der olefinisch ungesättigten Monomere eingesetzt.

Die Verwendung des wasserlöslichen Initiators bedingt, dass olefinisch ungesättigte Monomere, die zu der vorgelegten wässrigen Dispersion gegeben werden, sofort zu Oligomeren reagieren können. Diese Oligomere haben eine geringere Tendenz in die Polyurethanteilchen der vorgelegten Dispersion einzudringen als die kleineren Monomere.

Die Polymerisation wird zweckmäßigerweise bei einer Temperatur von 0 bis 160°C, vorzugsweise 60 bis 95°C durchgeführt.

Dabei wird bevorzugt unter Ausschluss von Sauerstoff gearbeitet, vorzugsweise in einem Stickstoffstrom. In der Regel wird die Polymerisation bei Normaldruck durchgeführt, jedoch ist auch die Anwendung von niedrigeren Drucken oder höheren Drucken möglich, insbesondere wenn Polymerisationstemperaturen angewendet werden, die oberhalb des Siedepunktes der Monomere und/oder Lösungsmittel liegen.

Die Herstellung der erfindungsgemäßen Polymerisate erfolgt durch radikalische wäßrige Emulsionspolymerisation, wobei dem Reaktionsmedium Tenside oder Schutzkolloide zugesetzt werden können. Eine Zusammenstellung geeigneter Emulgatoren und Schutzkolloide findet sich beispielsweise in Houben Weyl, Methoden der organischen Chemie, Band XIV/1 Makromolekulare Stoffe, Georg Thieme Verlag, Stuttgart 1961, S 411 ff.

Wichtig für die Herstellung der erfindungsgemäßen wässrigen Dispersion ist die Kontrolle der Bedingungen der Polymerisationsreaktion der Mischung von olefinisch ungesättigten Monomeren in Gegenwart des Polyurethans. Diese wird so durchgeführt, dass es sich um eine so genannte "verhungernde Polymerisation" (auch als "starve feed", "starve fed" oder "starved feed" Polymerisation bekannt handelt.

Als verhungernde Polymerisation im Sinne der vorliegenden Erfindung wird eine Emulsionspolymerisation angesehen bei der der Gehalt an Restmonomeren in der Reaktionslösung während der Reaktionsdauer minimiert wird, d.h. die Zudosierung der olefinisch ungesättigten Monomere so erfolgt, dass in der Reaktionslösung eine Konzentration von 6,0 Gew.-%, bevorzugt 5,0 Gew.-%, besonders bevorzugt 4,0 Gew.-%, jeweils bezogen auf die Gesamtmenge an olefinisch ungesättigten Monomeren, während der gesamten Reaktionsdauer nicht überschritten wird.

Die Konzentration der Monomere in der Reaktionslösung kann dabei gaschromatographisch bestimmt werden.

Die Konzentration der Monomere in der Reaktionslösung, im Folgenden als freie Monomere bezeichnet, kann auf verschiedene Art und Weisen gesteuert werden.

Eine Möglichkeit die Konzentration der freien Monomere gering zu halten ist es, die Dosiergeschwindigkeit der Mischung der olefinisch ungesättigten Monomere sehr niedrig zu wählen. Wenn die Zudosiergeschwindigkeit so niedrig ist, dass alle Monomere möglichst schnell reagieren können sobald sie in der Reaktionslösung sind, kann sichergestellt werden, dass die Konzentration der freien Monomere minimiert wird.

Neben der Dosiergeschwindigkeit, ist es wichtig, dass immer ausreichend Radikale in der Reaktionslösung vorhanden sind, so dass die zudosierten Monomere jeweils möglichst schnell zur Reaktion gebracht werden können. Dazu sind die Reaktionsbedingungen bevorzugt so zu wählen, dass mit dem Initiatorzulauf schon vor Beginn der Dosierung der olefinisch ungesättigten Monomeren begonnen wird. Bevorzugt wird mit der Dosierung mindestens 5 Minuten vorher begonnen, besonders bevorzugt mindestens 10 Minuten vorher. Bevorzugt wird mindestens 10 Gew.-% des Initiators, besonders bevorzugt mindestens 20 Gew.-%, ganz besonders bevorzugt mindestes 30 Gew.-% des Initiators, jeweils bezogen auf die Gesamtmenge an Initiator, vor Beginn der Dosierung der olefinisch ungesättigten Monomeren zugegeben.

Die Initiatormenge ist ein wichtiger Faktor für das ausreichende Vorhandensein von Radikalen in der Reaktionslösung. Die Menge an Initiator ist so zu wählen, dass zu jeder Zeit ausreichend Radikale zur Verfügung stehen, so dass die zudosierten Monomere reagieren können. Wird die Menge an Initiator erhöht, können auch größere Mengen an Monomeren zur gleichen Zeit zur Reaktion gebracht werden. Ein weiterer Faktor, der die Reaktionsgeschwindigkeit bestimmt, ist der Aufbau der Monomere.

Die Kontrolle der Konzentration der freien Monomere kann also durch das Zusammenspiel von Initiatormenge, Geschwindigkeit der Initiatorzugabe, Geschwindigkeit der Monomerenzugabe und durch die Auswahl der Monomere gesteuert werden. Sowohl die Verlangsamung der Dosierung, als auch die Erhöhung der Initiatormenge, sowie der frühzeitige Beginn mit der Zugabe des Initiators dienen dem Ziel die Konzentration der freien Monomere unter den oben genannten Grenzen zu halten.

Zu jedem Zeitpunkt der Reaktion kann die Konzentration der freien Monomere gaschromatographisch bestimmt werden. Typische Parameter für die Bestimmung sind die folgenden: 50m Silica-Kapillarsäule mit Polyethylenglykol-Phase bzw. 50m Silica-Kapillarsäule mit Polydimethylsiloxan-Phase, Trägergas Helium, Splitinjektor 150°C, Ofentemperatur 40 bis 220°C, Flammionisationsdetektor, Detektortemperatur 275°C, interner Standard Isobutylacrylat.

Sollte bei dieser Analyse eine Konzentration an freien Monomeren bestimmt werden, die nah an den Grenzwert für die verhungernde Polymerisation kommt, z.B. aufgrund sehr wenig reaktiver olefinisch ungesättigter Monomere, können die oben genannten Parameter zur Steuerung der Reaktion genutzt werden. Es kann in diesem Fall beispielsweise die Dosiergeschwindigkeit der Monomere verringert oder die Menge an Initiator erhöht werden.

Geeignete olefinisch ungesättigte Monomere können einfach oder mehrfach olefinisch ungesättigt sein.
Beispiele geeigneter einfach olefinisch ungesättigter Monomere umfassen (meth)acrylat-basierte einfach olefinisch ungesättigte Monomere, vinylische, einfach olefinisch ungesättigte Monomere, alpha-beta ungesättigte Carbonsäuren und Allylverbindungen.

Bei den (meth)acrylat-basierten, einfach olefinisch ungesättigten Monomeren kann es sich beispielsweise um (Meth)acrylsäure und Ester, Nitrile, oder Amide der (Meth)acrylsäure handeln.

Bevorzugt sind Ester der (Meth)acrylsäure, mit einem Rest R, der nicht olefinisch ungesättigt ist. 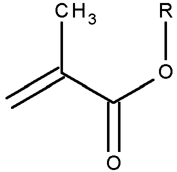 bzw.

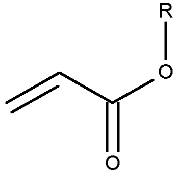

Der Rest R kann aliphatisch oder aromatisch sein. Bevorzugt ist der Rest R aliphatisch.
Der Rest R kann beispielsweise ein Alkylrest sein, oder Heteroatome enthalten. Beispiele für Reste R, die Heteroatome enthalten sind Ether. Bevorzugt handelt es sich beim Rest R um einen Alkylrest.

Für den Fall, dass R ein Alkylrest ist, kann es sich um einen linearen, verzweigten oder cyclischen Alkylrest handeln. In allen drei Fällen kann es sich um unsubstituierte oder um mit funktionellen Gruppen substituierte Alkylreste handeln. Bevorzugt hat der Alkylrest 1 bis 20, besonders bevorzugt 1 bis 10 Kohlenstoffatome.

Besonders bevorzugt geeignete einfach ungesättigte Ester der (Meth)acrylsäure mit einem unsubstituierten Alkylrest sind Methyl(meth)acrylat, Ethyl(meth)acrylat, Propyl(meth)acrylat, Isopropyl(meth)acrylat, n-Butyl(meth)acrylat, Isobutyl(meth)-acrylat, tert-Butyl(meth)acrylat, Amyl(meth)acrylat, Hexyl(meth)acrylat, Ethylhexyl(meth)acrylat, 3,3,5-Trimethylhexyl(meth)acrylat, Stearyl(meth)acrylat, Lauryl(meth)acrylat, Cycloalkyl(meth)acrylate, wie Cyclopentyl(meth)acrylat, Isobornyl(meth)acrylat sowie Cyclohexyl(meth)acrylat wobei n- und tert-Butyl(meth)acrylat und Methylmethacrylat ganz besonders bevorzugt sind.

Geeignete einfach ungesättigte Ester der (Meth)acrylsäure mit einem substituierten Alkylrest können bevorzugt mit einer oder mehreren Hydroxylgruppen substitutiert sein.
Besonders bevorzugt geeignete einfach ungesättigte Ester der (Meth)acrylsäure mit einem mit einer oder mehreren Hydroxylgruppen substituierten Alkylrest sind 2-Hydroxyethyl(meth)acrylat, 2-Hydroxypropyl(meth)acrylat, 3- Hydroxypropyl (meth)acrylat, 3-Hydroxybutyl(meth)acrylat sowie 4-Hydroxybutyl(meth)acrylat.

Bei den vinylischen, einfach ungesättigten Monomeren kann es sich um Monomere mit einem Rest R' an der Vinylgruppe handeln, der nicht olefinisch ungesättigt ist.

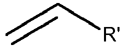

Der Rest R' kann aliphatisch oder aromatisch sein, wobei aromatische Reste bevorzugt sind.
Der Rest R' kann ein Kohlenwasserstoffrest sein, oder Heteroatome enthalten. Beispiele für Reste R', die Heteroatome enthalten sind Ether, Ester, Amide, Nitrile und Heterocylen.
Bevorzugt handelt es sich beim Rest R' um einen Kohlenwasserstoffrest.
Für den Fall, dass es sich bei R' um einen Kohlenwasserstoffrest handelt, kann dieser mit Heteroatomen substituiert oder unsubstituiert sein, wobei unsubstituierte Reste bevorzugt sind.
Bevorzugt ist der Rest R' ein aromatischer Kohlenwasserstoffrest.
Besonders bevorzugte vinylische, olefinisch ungesättigte Monomere sind vinylaromatische Kohlenwasserstoffe, insbesondere Vinyltoluol, alpha-Methylstyrol und insbesondere Styrol.
Wenn Heteroatome enthalten sind, sind olefinisch ungesättigte Monomere, wie Acrylnitril, Methacrylnitril, Acrylamid, Methacrylamid, N-Dimethylacrylamid, Vinylacetat, Vinylpropionat, Vinylchlorid, N-Vinylpyrrolidon, N-Vinylcaprolactam, N-Vinylformamid, N-Vinylimidazol und N-Vinyl-2-Methylimidazolin bevorzugt.

Beispiele geeigneter mehrfach olefinisch ungesättigter Monomere umfassen Ester der (Meth)acrylsäure mit einem olefinisch ungesättigten Rest R" und Allylether von mono- oder mehrwertigen Alkoholen. Bei dem Rest R" kann es sich um einen Allylrest handeln oder um einen (Meth)acrylsäureesten. 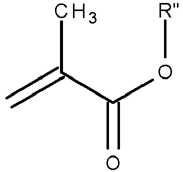 bzw.

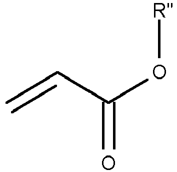

Bevorzugte mehrfach olefinisch ungesättigte Monomere umfassen Ethylenglykoldi(meth)acrylat, 1,2-Propylenglykoldi(meth)acrylat, 2,2-Propylenglykoldi(meth)acrylat, Butandiol-1,4-di(meth)acrylat, Neopentylglykoldi-(meth)acrylat, 3-Methylpentandioldi(meth)acrylat, Diethylenglykoldi(meth)acrylat, Triethylenglykoldi(meth)acrylat, Tetraethylenglykoldi(meth)acrylat, Dipropylenglykol-di(meth)acrylat, Tripropylenglykoldi(meth)acrylat, Hexandioldi(meth)acrylat und Allyl(meth)acrylat.
Darüber hinaus umfassen bevorzugte mehrfach olefinisch ungesättigte Verbindungen Acrylsäure- und Methacrylsäureester von Alkoholen mit mehr als zwei OH-Gruppen, wie zum Beispiel Trimethylolpropantri(meth)acrylat oder Glycerintri(meth)acrylat, aber auch Trimethylolpropandi(meth)acrylatmonoallylether, Trimethylolpropan(meth)acrylatdiallylether, Pentaerythrittri(meth)acrylatmonoallylether, Pentaerythritdi(meth)acrylatdiallylether, Pentaerythrit(meth)acrylattriallylether, Triallylsaccharose, und Pentaallylsaccharose.

Besonders bevorzugt wird Allylmethacrylat eingesetzt.

Die Mischung der olefinisch ungesättigten Monomere enthält mindestens ein mehrfach olefinisch ungesättigtes Monomer. Bevorzugt enthält die Mischung der olefinisch ungesättigten Monomere außerdem ein oder mehrere einfach ungesättigte Ester der (Meth)acrylsäure mit einem unsubstituierten Alkylrest.

Bevorzugt enthält die Mischung der olefinisch ungesättigten Monomere 0,1 bis 6,0 mol-%, besonders bevorzugt 0,1 bis 2,0 mol-%, ganz besonders bevorzugt 0,1 bis 1,0 mol-% mehrfach olefinisch ungesättigte Monomere.

Bevorzugt enthält die Mischung der olefinisch ungesättigten Monomere 0,1 bis 6,0 mol-%, besonders bevorzugt 0,1 bis 2,0 mol-%, ganz besonders bevorzugt 0,1 bis 2,0 mol-% Allylmethacrylat. Besonders bevorzugt sind außer Allylmethacrylat keine weiteren mehrfach olefinisch ungesättigten Monomere in der Mischung enthalten.

Bevorzugt enthält die Mischung von olefinisch ungesättigten Monomeren < 10,0 Gew.-%, besonders bevorzugt < 5,0 Gew.-% vinylaromatische Kohlenwasserstoffe, bezogen auf die Gesamtmenge an olefinisch ungesättigten Monomeren. Ganz besonders bevorzugt sind keine vinylaromatischen Kohlenwasserstoffe in der Mischung der olefinisch ungesättigten Monomere enthalten.

In einer bevorzugten Ausführungsform enthält die Mischung von olefinisch ungesättigten Monomeren:
- 98,0 bis 99,5 Gew.-% einen oder mehrere einfach ungesättigte Ester der (Meth)acrylsäure mit unsubstituierten Alkylresten, wobei die Alkylreste eine Länge von 1 - 10 Kohlenstoffatomen haben, und
- 0,5 bis 2,0 Gew.-% einen oder mehrere mehrfach ungesättigte Ester der (Meth)acrylsäure,
jeweils bezogen auf die Gesamtmenge an olefinisch ungesättigten Monomeren.

Bevorzugt wird der Mischung von olefinisch ungesättigten Monomeren mindestens ein Lösemittel zugesetzt, wobei das Lösemittel in jedem Verhältnis mit Wasser und in jedem Verhältnis mit der Mischung von olefinisch ungesättigten Monomeren mischbar ist. Besonders geeignete Lösemittel sind N-Methylpyrrolidon, N-Ethylpyrrolidon und Etheralkohole, wie insbesondere Methoxypropanol.

Durch den beschriebenen Herstellungsprozess haben die Mischpolymerisate in der erfindungsgemäßen wässrigen Dispersion einen Kern-Schale-Aufbau, der durch den angegebenen Herstellungsprozess erreicht werden kann. Der Kern-Schale Aufbau ist dabei charakterisiert durch einen Kern, enthaltend mindestens ein Polyurethan, und eine Schale, enthaltend mindestens Polymer welches durch Polymerisation von olefinisch ungesättigten Monomeren erhalten wurde.

Der beschriebene Kern-Schale-Aufbau wird durch die speziellen Reaktionsbedingungen der verhungernden Polymerisation erreicht. Es sind während der gesamten Reaktionsdauer nie größere Mengen an olefinisch ungesättigten Monomeren in Gegenwart des vorgelegten Polyurethans vorhanden, welche in das Polyurethanteilchen eindringen könnten. Durch die während der Monomerzugabe in der wässrigen Phase immer vorhandenen Radikale, die der wasserlösliche Initiator bereitstellt, werden bei Zugabe sofort Oligomere gebildet, die nicht mehr in das Polyurethan eindringen können. Diese polymerisieren sodann auf der Oberfläche des Polyurethans.

In einer bevorzugten Ausführungsform beträgt das Gewichtsverhältnis von Kern zu Schale 80:20 bis 20:80, besonders bevorzugt 60:40 bis 40:60.

Die Mikrostruktur der Mischpolymerisate kann durch Transmissionselektronenmikroskopie untersucht werden: Dazu müssen Strukturen ins Polymer eingebaut werden, die einer Kontrastierung, vorzugsweise durch Schwermetall-Verbindungen, zugänglich gemacht werden können. Das geschieht bevorzugt während der radikalischen Copolymerisation durch den Einbau von Polydien - Sequenzen ins Mischpolymerisat, wobei bevorzugt Isopren oder Butadien mit olefinisch ungesättigten Verbindungen und Allylverbindungen copolymerisiert werden.
Aus der wässrigen Dispersion muss zur Untersuchung ein Polymerfilm gebildet werden, welcher nach Kontrastierung in einer Osmium- oder Rutheniumtetroxidangereicherten Atmosphäre elektronenmikroskopisch untersucht werden kann.

Bevorzugt haben die Mischpolymerisate eine Teilchengröße (z-Mittel) von 60 bis 130, besonders bevorzugt von 70 bis 115 nm, gemessen mittels Photonkorrelationsspektroskopie mit einem Malvern Nano S90 (Fa. Malvern Instruments) bei 25 ± 1 °C. Das Gerät, ausgestattet mit einem 4mW He-Ne Laser bei einer Wellenlänge von 633nm, deckt einen Größenbereich von 1 bis 3000 nm ab.

Die Mischpolymerisate können vernetzt sein. Der Gelanteil der erfindungsgemäßen wässrigen Dispersion beträgt bevorzugt 40 bis 97 Gew.-%, besonders bevorzugt 75 bis 90 Gew.-%, jeweils bezogen auf den Festkörper der Dispersion.
Der Gelanteil kann gravimetrisch bestimmt werden, indem die Dispersion gefriergetrocknet wird, die Gesamtmasse des gefriergetrockneten Polymers bestimmt wird und das Polymer anschließend 24 Stunden bei 25°C in einem Überschuss an Tetrahydrofuran (Verhältnis Tetrahydrofuran zu gefriergetrocknetem Polymer = 300 : 1) extrahiert wird. Der unlösliche Anteil wird abgetrennt und bei 50°C vier Stunden lang im Umluftofen getrocknet. Im Anschluss wird der getrocknete, unlösliche Anteil gewogen und der Quotient mit der Gesamtmasse des gefriergetrockneten Polymers gebildet. Der erhaltene Wert entspricht dem Gelanteil.

Die gewichtsmittlere Molmasse der Mischpolymerisate beträgt bevorzugt 3 * 10⁷ g/mol bis 8,5 * 10⁹ g/mol, wobei die gewichtsmittlere Molmasse mit Kleinwinkel-Laserlichtstreuung ermittelt werden kann.

Die Säurezahl der Mischpolymerisate beträgt 0 bis 220 mg KOH / g Festharz, bevorzugt 0 bis 40 mg KOH / g Festharz, besonders bevorzugt 0 bis 25 mg KOH / g Festharz. Die OH-Zahl ist kleiner 70, bevorzugt kleiner 20 mg KOH / g Festharz.
Die Säurezahl kann in Anlehnung an die DIN EN ISO 2114 in homogener Lösung aus THF / Wasser (9 Vol.-Teile THF und 1 Vol.-Teil destilliertes Wasser) mit ethanolischer Kaliumhydroxid-Lösung bestimmt werden.
Die OH-Zahl kann in Anlehnung an R.-P. Krüger, R. Gnauck und R. Algeier, Plaste und Kautschuk, 20, 274 (1982), mittels Essigsäureanhydrid in Gegenwart von 4-Dimethylaminopyridin als Katalysator in einer Tetrahydrofuran (THF) / Dimethylformamid (DMF)-Lösung bei Raumtemperatur ermittelt werden, wobei der verbliebene Überschuss an Essigsäureanhydrid nach Acetylierung vollständig hydrolysiert wird und die Essigsäure mit alkoholischer Kaliumhydroxid-Lösung potentiometrisch zurücktitriert wird.

Vorteilhaft ist die Verwendung der erfindungsgemäßen Dispersion zur Herstellung von Lacken insbesondere zur Herstellung von Basislacken.

Die vorliegende Erfindung betrifft ferner einen wässrigen Basislack, der eine erfindungsgemäße Dispersion enthält.

Der wässrige Basislack enthält in der Regel farbgebende Pigmente und/oder optisch effektgebende Pigmente.

Solche Farbpigmente und Effektpigmente sind dem Fachmann werden beispielsweise in Römpp-Lexikon Lacke und Druckfarben, Georg Thieme Verlag, Stuttgart, New York, 1998, Seite 176 und 451, beschrieben.

Effektpigmente sind beispielsweise Metalleffektpigmente wie z.B. Aluminiumpigmente, Goldbronzen, feuergefärbte Bronzen und/oder Eisenoxid-Aluminiumpigmente, Perglanzpigmente wie z.B. Fischsilber, basisches Bleicarbonat, Bismutoxidchlorid und/oder Metalloxid-Glimmer-Pigmente und/oder sonstige Effektpigmente wie z.B. mikronisiertes Titandioxid, blättchenförmiges Graphit, blättchenförmiges Eisenoxid, Mehrschicht-Effekt-Pigmente aus PVD-Filmen und/oder Liquid Crystal Polymer-Pigmente.
Der Anteil der Pigmente liegt vorzugsweise im Bereich von 1,0 bis 40,0 Gew.-%, bevorzugt 2,0 bis 20,0 Gew.-%, besonders bevorzugt 5,0 bis 15,0 Gew.-%, bezogen auf das Gesamtgewicht des pigmentierten wässrigen Basislacks.

Im erfindungsgemäßen Basislack können physikalisch, thermisch oder thermisch und mit aktinischer Strahlung härtbare Bindemittel enthalten sein.

Im Rahmen der vorliegenden Erfindung bedeutet der Begriff "physikalische Härtung" die Bildung eines Films durch Abgabe von Lösemittel aus Polymerlösungen oder Polymerdispersionen. Üblicherweise sind hierfür keine Vernetzungsmittel notwendig.

Im Rahmen der vorliegenden Erfindung bedeutet der Begriff "thermische Härtung" die durch Hitze initiierte Vernetzung einer Lackschicht, bei der in dem zugrunde liegenden Lack entweder ein separat vorliegendes Vernetzungsmittel oder aber selbstvernetzende Bindemittel angewandt werden. Das Vernetzungsmittel enthält reaktive funktionelle Gruppen, die zu den in den Bindemitteln vorhandenen reaktiven funktionellen Gruppen komplementär sind. Üblicherweise wird dies von der Fachwelt als Fremdvernetzung bezeichnet. Sind die komplementären reaktiven funktionellen Gruppen oder autoreaktiven funktionellen Gruppen, d.h. Gruppen, die mit Gruppen derselben Art reagieren, bereits in den Bindemittelmolekülen vorhanden, liegen selbstvernetzende Bindemittel vor. Beispiele geeigneter komplementärer reaktiver funktioneller Gruppen und autoreaktiver funktioneller Gruppen sind aus der deutschen Patentanmeldung DE 199 30 665 A1, Seite 7, Zeile 28 bis Seite 9, Zeilen 24 bekannt.

Im Rahmen der vorliegenden Erfindung ist unter aktinischer Strahlung elektromagnetische Strahlung wie nahes Infrarot (NIR), UV-Strahlung, insbesondere UV-Strahlung, und Korpuskularstrahlung wie Elektronenstrahlung zu verstehen. Die Härtung durch UV-Strahlung wird üblicherweise durch radikalische oder kationische Photoinitiatoren initiiert.

Werden die thermische Härtung und die Härtung mit aktinischer Steahlung gemeinsam angewandt, spricht man auch von "Dual Cure".
In der vorliegenden Erfindung sind Basislacke bevorzugt, die thermisch oder thermisch und mit aktinischer Strahlung, also mittels "Dual Cure", härtbar sind.

Insbesondere sind solche Basislacke bevorzugt, die als Bindemittel ein Polyurethanharz und als Vernetzungsmittel ein Aminoplastharz oder ein blockiertes oder unblockiertes Polyisocyanat, bevorzugt ein Aminoplasthatz, enthalten. Unter den Aminoplastharzen sind insbesondere Melaminharze bevorzugt.

Bevorzugt ist zudem ein Verdicker enthalten. Als Verdicker eignen sich anorganische Verdicker aus der Gruppe der Schichtsilikate. Besonders geeignet sind Lithium-Aluminium-Magnesium Silikate.

Neben den anorganischen Verdickern können jedoch auch ein oder mehrere organische Verdicker eingesetzt werden. Diese werden vorzugsweise gewählt aus der Gruppe bestehend aus (Meth)acrylsäure-(Meth)acrylat-Copolymerisat-Verdickern, wie beispielsweise dem Handelsprodukt Viscalex HV30 (Ciba, BASF) und Polyurethanverdickern, wie beispielsweise dem Handelsprodukt DSX® 1550 der Firma Cognis. Als (Meth)acrylsäure-(Meth)acrylat-Copolymerisat-Verdicker werden solche bezeichnet, die neben Acrylsäure und/oder Methacrylsäure auch ein oder mehrere Acrylsäureester (das heißt Acrylate) und/oder ein oder mehrere Methacrylsäureester (das heißt Methacrylate) einpolymerisiert enthalten. Den (Meth)acrylsäure-(Meth)acrylat-Copolymerisat-Verdickern gemein ist, dass diese in alkalischem Medium, das heißt bei pH-Werten > 7, insbesondere > 7,5 durch Salzbildung der Acrylsäure und/oder Methacrylsäure, das heißt durch die Bildung von Carboxylatgruppen einen starken Viskositätsanstieg zeigen. Werden (Meth)acrylsäureester eingesetzt, die aus (Meth)acrylsäure und einem C₁-C₆-Alkanol gebildet werden, so erhält man im wesentlichen nicht-assoziativ wirkende (Meth)acrylsäure-(Meth)acrylat-Copolymerisat-Verdicker, wie beispielsweise das oben genannte Viscalex HV30. Im Wesentlichen nicht-assoziativ wirkende (Meth)acrylsäure-(Meth)acrylat-Copolymerisat-Verdicker werden in der Literatur auch als ASE-Verdicker ("Alkali Soluble/Swellable Emulsion", alkalisch lösliche/quellbare Emulsion oder Dispersion) bezeichnet. Als (Meth)acrylsäure-(Meth)acrylatCopolymerisat-Verdicker sind jedoch auch sogenannte HASE-Verdicker ("Hydrophobically Modified Anionic Soluble Emulsions", hydrophob modifizierte anionisch lösliche Emulsion oder Dispersion) einsetzbar. Diese werden erhalten, wenn als Alkanol anstelle oder zusätzlich zu den C₁-C₆-Alkanolen solche mit einer größeren Anzahl an Kohlenstoffatomen, beispielsweise 7 bis 30, oder 8 bis 20 Kohlenstoffatomen eingesetzt werden. HASE-Verdicker wirken im Wesentlichen assoziativ verdickend. Die einsetzbaren (Meth)acrylsäure-(Meth)acrylatCopolymerisat-Verdicker eignen sich aufgrund ihrer verdickenden Eigenschaften nicht als Bindemittel-Harze, sie fallen somit nicht unter die als Bindemittel bezeichneten physikalisch, thermisch oder thermisch und aktinisch härtbaren Bindemitteln und sind somit explizit verschieden von den Poly(meth)acrylat basierten Bindemitteln, die in den erfindungsgemäßen Basislackzusammensetzungen-Zusammensetzungen eingesetzt werden können. Als Polyurethanverdicker sind die in der Literatur als HEUR ("Hydrophobically Modified Ethylene Oxide Urethane Rheology Modifiers", hydrophob modifizierte Ethylenoxid-Urethan-Rheologieadditive) bezeichneten, assoziativ wirkenden Verdicker zu verstehen. Chemisch handelt es sich hierbei um nichtionische verzweigte oder unverzweigte Blockcopolymere aus Polyethylenoxid-Ketten (manchmal auch Polypropylenoxid-Ketten), die über Urethanbindungen miteinander verknüpft sind und die endständige langkettige Alkyl- oder Alkylengruppen mit 8 bis 30 Kohlenstoffatomen tragen. Typische Alkylgruppen sind beispielsweise Dodecyl oder Stearyl-Gruppen, eine typische Alkenylgruppe ist beispielsweise eine Oleylgruppe, eine typische Arylgruppe ist die Phenylgruppe und eine typische alkylierte Arylgruppe ist beispielsweise eine Nonylphenylgruppe. Die Polyurethan-Verdicker eignen sich aufgrund ihrer verdickenden Eigenschaften und Struktur nicht als physikalisch, thermisch oder thermisch und physikalisch härtbare Bindemittel-Harze. Sie sind somit explizit verschieden von den Polyurethanen, die in den erfindungsgemäßen Basislack-Zusammensetzungen als Bindemittel eingesetzt werden können.

Darüber hinaus kann der wässrige Basislack noch mindestens einen Zusatzstoff enthalten. Beispiele für derartige Zusatzstoffe sind rückstandsfrei oder im Wesentlichen rückstandsfrei thermisch zersetzbare Salze, von Polyurethanharzen verschiedene physikalisch, thermisch und/oder mit aktinischer Strahlung härtbare Harze als Bindemittel, weitere Vernetzungsmittel, organische Lösemittel, Reaktivverdünner, transparente Pigmente, Füllstoffe, molekulardispers lösliche Farbstoffe, Nanopartikel, Lichtschutzmittel, Antioxidantien, Entlüftungsmittel, Emulgatoren, Slipadditive, Polymerisationsinhibitoren, Initiatoren für radikalische Polymerisationen, Haftvermittler, Verlaufsmittel, filmbildende Hilfsmittel, Sag-Control-Agents (SCAs), Flammschutzmittel, Korrosionsinhibitoren, Wachse, Sikkative, Biozide und Mattierungsmittel.

Geeignete Zusatzstoffe der vorstehend genannten Art sind beispielsweise aus
- der deutschen Patentanmeldung DE 199 48 004 A1, Seite 14, Zeile 4, bis Seite 17, Zeile 5,
- dem deutschen Patent DE 100 43 405 C1, Spalte 5, Absätze [0031] bis [0033],
bekannt. Sie werden in den üblichen und bekannten Mengen eingesetzt.

Der Festkörpergehalt der erfindungsgemäß eingesetzten Basislacke kann je nach den Erfordernissen des Einzelfalls variieren. In erster Linie richtet sich der Festkörpergehalt nach der für die Applikation, insbesondere Spritzapplikation, erforderlichen Viskosität, so dass er vom Fachmann aufgrund seines allgemeinen Fachwissens gegebenenfalls unter Zuhilfenahme weniger orientierender Versuche eingestellt werden kann.

Vorzugsweise liegt der Festkörpergehalt der Basislacke bei 5 bis 70 Gew.-%, besonders bevorzugt bei 10 bis 65 Gew.-% und insbesondere bevorzugt bei 15 bis 60 Gew.-%.

Unter Festkörpergehalt ist derjenige Gewichtsanteil zu versehen, der unter festgelegten Bedingungen beim Eindampfen als Rückstand verbleibt. Der Festkörper wird nach DIN EN ISO 3251 bei 130°C, 60 min, Einwaage 1,0 g, bestimmt.

Die Herstellung der erfindungsgemäß eingesetzten Basislacke kann unter Einsatz der für die Herstellung von Basislacken üblichen und bekannten Mischverfahren und Mischaggregate erfolgen.

Die erfindungsgemäßen Basislacke können sowohl als Einkomponenten(1K), Zweikomponenten(2K)- oder Mehrkomponenten(3K, 4K)-Systeme zur Anwendung kommen. Bevorzugt sind (1K)-Systeme.

In Einkomponenten(1K)-Systemen liegen Bindemittel und Vernetzungsmittel nebeneinander, d.h. in einer Komponente, vor. Voraussetzung hierfür ist, dass die beiden Bestandteile erst bei höheren Temperaturen und/oder bei Bestrahlen mit aktinischer Strahlung miteinander vernetzen.

In Zweikomponenten(2K)-Systemen liegen beispielsweise Bindemittel und Vernetzungsmittel getrennt voneinander in mindestens zwei Komponenten vor, die erst kurz vor der Applikation zusammengegeben werden. Diese Form wird dann gewählt, wenn Bindemittel und Vernetzungsmittel bereits bei Raumtemperatur miteinander reagieren. Lacke dieser Art werden vor allem zur Beschichtung thermisch empfindlicher Substrate, insbesondere in der Autoreparaturlackierung, angewandt.

Die Applikation des erfindungsgemäß eingesetzten pigmentierten wässrigen Basislacks auf ein Substrat kann in den im Rahmen der Automobilindustrie üblichen Schichtdicken im Bereich von beispielsweise 5 bis 100 Mikrometer, bevorzugt 5 bis 60 Mikrometer erfolgen (Schichtdicke nach Einbrennvorgang). Dabei werden beispielsweise die bekannten Methoden wie Spritzen, Rakeln, Streichen, Giessen, Tauchen, Tränken, Träufeln oder Walzen angewendet. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heissspritzapplikation wie zum Beispiel Hot-Air-Heissspritzen.

Nach der Applikation des pigmentierten wässrigen Basislacks kann dieser nach bekannten Methoden getrocknet werden. Beispielsweise können (1K)-Basislacke bei Raumtemperatur für 1 bis 60 Minuten abgelüftet werden und darauf folgend bevorzugt bei gegebenenfalls leicht erhöhten Temperaturen von 30 bis 80°C getrocknet werden. Unter Ablüften und Trocknung ist im Rahmen der vorliegenden Erfindung ein Abdunsten von organischen Lösemitteln und/oder Wasser zu verstehen, wodurch der Lack trockener, aber noch nicht gehärtet wird. beziehungsweise noch kein vollständig vernetzter Lackfilm gebildet wird.

Dann wird ein handelsüblicher Klarlack nach ebenfalls gängigen Methoden appliziert, wobei die Trockenschichtdicken wiederum in den gängigen Bereichen, beispielsweise 5 bis 100 Mikrometer, liegen. Solche Klarlacke sind dem Fachmann bekannt.

Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten pigmentierten Basislack gehärtet. Dabei finden beispielsweise Vernetzungsreaktionen statt, wodurch eine erfindungsgemäße farb- und/oder effektgebende mehrschichtige Lackierung auf einem Substrat hergestellt wird. Die Härtung erfolgt bevorzugt thermisch oder thermisch und mit aktinischer Strahlung bei Temperaturen von 20 bis 200°C.

Ein weiterer Aspekt der vorliegenden Erfindung ist ein Verfahren zur Herstellung einer farb- und/oder effektgebenden mehrschichtigen Lackierung, bei dem
(a) ein pigmentierter wässriger Basislack auf ein Substrat aufgebracht wird,
(b) aus dem in Stufe (1) aufgebrachten Lack ein Polymerfilm gebildet wird,
(c) auf die so erhaltene Basislackschicht ein Klarlack aufgebracht wird und anschließend
(d) die Basislackschicht zusammen mit der Klarlackschicht gehärtet wird
dadurch gekennzeichnet, dass in Stufe (a) ein pigmentierter wässriger Basislack eingesetzt wird, wobei der Basislack eine erfindungsgemäße Dispersion enthält.

Alle vorstehend genannten Ausführungen hinsichtlich der erfindungsgemäßen Dispersion und des wässrigen Basislacks gelten auch für die erfindungsgemäße Verwendung bzw. das erfindungsgemäße Verfahren. Dies gilt insbesondere auch für alle bevorzugten, besonders bevorzugten und ganz besonders bevorzugten Merkmale.

Vorteilhaft kann der erfindungsgemäße wässrige Basislacks zur Beschichtung von Automobilkarossen und/oder Anbauteilen von Automobilkarossen aus Kunststoff verwendet werden.

Mit Hilfe des erfindungsgemäßen Verfahrens können metallische und nichtmetallische Substrate, insbesondere Kunststoffsubstrate, vorzugsweise Automobilkarosserien oder Teile davon lackiert werden.

Im Folgenden wird die Erfindung anhand von Beispielen erläutert.

### Beispiele

Soweit nicht anders angegeben, wurde die Hydroxylzahl in den folgenden Beispielen in Anlehnung an R.-P. Krüger, R. Gnauck und R. Algeier, Plaste und Kautschuk, 20, 274 (1982), mittels Essigsäureanhydrid in Gegenwart von 4-Dimethylaminopyridin als Katalysator in einer Tetrahydrofuran (THF) / Dimethylformamid (DMF)-Lösung bei Raumtemperatur ermittelt, wobei der verbliebene Überschuss an Essigsäureanhydrid nach Acetylierung vollständig hydrolysiert wurde und die Essigsäure mit alkoholischer Kaliumhydroxid-Lösung potentiometrisch zurücktitriert wurde. Acetylierungszeiten von 60 min reichten in allen Fällen aus, um einen vollständigen Umsatz zu garantieren.

Soweit nicht anders angegeben, wurde die Säurezahl in den folgenden Beispielen in Anlehnung an die DIN EN ISO 2114 in homogener Lösung aus THF / Wasser (9 Vol.-Teile THF und 1 Vol.-Teil destilliertes Wasser) mit ethanolischer Kaliumhydroxid-Lösung bestimmt

Soweit nicht anders angegeben, wurden Feststoffgehalt, im Folgenden auch als Festanteil bezeichnet, in den folgenden Beispielen nach DIN EN ISO 3251 bei 130°; 60 min, Einwaage 1,0g, bestimmt.

Die zahlenmittlere Molmasse (Mₙ) wurde in den folgenden Beispielen, soweit nicht anders angegeben, mittels eines Dampfdruckosmometers Typ 10.00 (Fa. Knauer) an Konzentrationsreihen in Toluol bei 50°C nach E. Schröder, G. Müller, K.-F. Arndt, "Leitfaden der Polymercharakterisierung", Akademie-Verlag, Berlin, S. 47 - 54, 1982, ermittelt.

### Polyurethan-Dispersionen

### Beispiel D-P1

### Herstellung einer Dispersion eines ungesättigten Polyesterurethans mit alpha-Methylstyryl-Gruppen

Eine Dispersion eines alpha-methylstyryl-haltiges Polyurethans wurde in Anlehnung an die Patentschrift DE 19948004 B4, Seite 27, Beispiel 1, "Herstellung eines erfindungsgemäßen Polyurethans (B)", hergestellt, wobei jedoch der Festanteil der resultierenden Dispersion, nur 29 statt 35 Gew.-% betrug. In Anlehnung an das in der Patentschrift DE 19948004 B4 erwähnte Addukt (B2), Herstellbeispiel 1, wurde ein Addukt mit Monoethanolamin und Trimethylolpropan statt mit Diethanolamin hergestellt:
Hierzu wurde zuerst in einem Reaktionsgefäß, ausgerüstet mit Rührer, Innenthermometer, Rückflußkühler und elektrischer Heizung unter Stickstoff 200,0 Gewichtsteile Methylethylketon, 800,0 Gewichtsteile N-Methylpyrrolidon und 221,3 Gewichtsteile Monoethanolamin (Fa. BASF SE) bei 20°C vorgelegt. Zu dieser Mischung wurden während eineinhalb Stunden 778,7 Gewichtsteile 1-(1-Isocyanato-1-methylethyl)-3-(1-methylethenyl)-benzol (TMI® (META) Unsaturated Aliphatic Isocyanate, Fa. Cytec) mit einem Isocyanatgehalt von 20,4 Gew.-% Isocyanat zugetropft, so daß die Reaktionstemperatur 40°C nicht überschritten wurde. Die resultierende Reaktionsmischung wurde so lange gerührt, bis keine freien Isocyanatgruppen mehr nachweisbar waren. Danach wurde die Reaktionsmischung mit 200 ppm Hydrochinon stabilisiert.

Der theoretische Feststoffgehalt der so hergestellten Lösung des beschriebenen Addukts lag bei 50 Gew.-%.

Nun wurde in einem weiteren Reaktionsgefäß, ausgerüstet mit Rührer, Innenthermometer, Rückflußkühler und elektrischer Heizung, 431,7 Gewichtsteile eines linearen Polyesterpolyols und 69,7 Gewichtsteile Dimethylolpropionsäure (Fa. GEO Speciality Chemicals) in 355,8 Gewichtsteilen Methylethylketon und 61,6 Gewichtsteilen N-Methylpyrrolidon unter Stickstoff gelöst. Das lineare Polyesterpolyol wurde zuvor aus dimerisierter Fettsäure (Pripol® 1012, Fa. Uniqema), Isophthalsäure (Fa. BP Chemicals) und Hexan-1,6-diol (Fa. BASF SE) hergestellt (Gewichtsverhältnis der Ausgangsstoffe: dimere Fettsäure zu Isophthalsäure zu Hexan-1,6-diol = 54,00 : 30,02 : 15,98) und wies eine Hydroxylzahl von 73 mg KOH / g Festanteil und ein zahlenmittlere Molmasse von 1379 g/mol auf.
Zu der resultierenden Lösung wurden bei 45°C 288,6 Gewichtsteile Isophorondiisocyanat (Basonat® I, Fa. BASF SE) mit einem Isocyanatgehalt von 37,75 Gew.-% hinzugegeben. Nach dem Abklingen der exothermen Reaktion wurde die Reaktionsmischung unter Rühren langsam auf 80°C erwärmt. Es wurde bei dieser Temperatur weiter gerührt, bis der Isocyanatgehalt der Lösung 3,2 Gew.-% betrug und konstant war. Danach wurde die Reaktionsmischung auf 65°C abgekühlt und 85,2 Gewichtsteile des oben beschriebenen Addukts zusammen mit 21,8 Gewichtsteilen Trimethylolpropan (Fa. BASF SE) hinzugegeben. Die resultierende Reaktionsmischung wurde so lange bei 65°C gerührt, bis der Isocyanatgehalt der Lösung auf 1,0 Gew.-% gesunken war. Jetzt wurden 22,2 Gew.-% Diethanolamin (Fa. BASF SE) zugegeben und der Gehalt an Isocyanatgruppen verfolgt, bis keine freien Isocyanatgruppen mehr nachweisbar waren. Das resultierende, gelöste Polyurethan wurde mit 139,7 Gewichtsteilen Methoxypropanol und 43,3 Gewichtsteilen Triethylamin (Fa. BASF SE) versetzt. 30 Minuten nach der Aminzugabe wurde die Temperatur der Lösung auf 60°C gesenkt, wonach während 30 Minuten 1981 Gewichtsteile deionisiertes Wasser unter Rühren hinzugegeben wurden. Aus der resultierenden Dispersion wurde das Methylethylketon bei 60°C unter Vakuum abdestilliert. Hiernach wurden eventuelle Lösemittel- und Wasserverluste ausgeglichen.
Die so erhaltene Dispersion eines alpha-methylstyryl-haltigen Polyurethans wies einen Feststoffgehalt von 29,0 Gew-% auf, die Säurezahl lag bei 34,0 mg KOH / g Feststoffgehalt und der pH-Wert bei 7,0 (gemessen bei 23°C).

### Beispiel D-P2

### Herstellung einer Dispersion eines gesättigten Polyesterurethans mit Isotridecyl-Gruppen

Wie im Herstellungsbeispiel DP-1 wurde eine Polyurethandispersion hergestellt, die allerdings keine alpha-Methylstyryl-Gruppen aufweist, sondern Isotridecyl-Gruppen. In einem Reaktionsgefäß, ausgerüstet mit Rührer, Innenthermometer, Rückflußkühler und elektrischer Heizung wurden 440,1 Gewichtsteile eines linearen Polyesterpolyols, hergestellt aus dimerisierter Fettsäure (Pripol® 1012, Fa. Uniqema), Isophthalsäure (Fa. BP Chemicals) und Hexan-1,6-diol (Fa. BASF SE) (Gewichtsverhältnis der Ausgangsstoffe: dimere Fettsäure zu Isophthalsäure zu Hexan-1,6-diol = 54,00 : 30,02 : 15,98), mit einer Hydroxylzahl von 73 mg KOH / g Festanteil und einer zahlenmittleren Molmasse von 1379 g/mol, sowie 71,1 Gewichtsteilen Dimethylolpropionsäure (Fa. GEO Speciality Chemicals) in 362,7 Gewichtsteilen Methylethylketon und 62,8 Gewichtsteilen N-Methylpyrrolidon unter Stickstoff gelöst. Zu der resultierenden Lösung wurden bei 45°C 294,3 Gewichtsteile Isophorondiisocyanat (Basonat® I, Fa. BASF SE) mit einem Isocyanatgehalt von 37,75 Gew.-% hinzugegeben. Nach dem Abklingen der exothermen Reaktion wurde die Reaktionsmischung unter Rühren langsam auf 80°C erwärmt. Es wurde bei dieser Temperatur weiter gerührt, bis der Isocyanatgehalt der Lösung 3,2 Gew.-% betrug und konstant war. Danach wurden die Reaktionsmischung auf 70°C abgekühlt und 33,1 Gewichtsteile Isotridecylalkohol (Isotridecanol N, Fa. BASF SE) zusammen mit 19,3 Gewichtsteilen Trimethylolpropan (Fa. BASF SE) und 25,6 Gewichtsteilen Methylethylketon hinzugegeben. Die resultierende Reaktionsmischung wurde so lange bei 70°C gerührt, bis der Isocyanatgehalt der Lösung auf 0,8 Gew.-% gesunken war. Jetzt wurden 19,6 Gew.-% Diethanolamin (Fa. BASF SE) zugegeben und der Gehalt an Isocyanatgruppen verfolgt, bis keine freien Isocyanatgruppen mehr nachweisbar waren. Das resultierende, gelöste Polyurethan wurde mit 123 Gewichtsteilen Methoxypropanol und 43,8 Gewichtsteilen Triethylamin (Fa. BASF SE) versetzt. 30 Minuten nach der Aminzugabe wurde die Temperatur der Lösung auf 60°C gesenkt, wonach während 30 Minuten 2009 Gewichtsteile deionisiertes Wasser unter Rühren hinzugegeben wurden. Aus der resultierenden Dispersion wurde das Methylethylketon bei 60°C unter Vakuum abdestilliert. Hiernach wurden eventuelle Lösemittel- und Wasserverluste ausgeglichen.

Die so erhaltene Polyurethandispersion wies einen Feststoffgehalt von 29,0 Gew-% auf, die Säurezahl lag bei 34,1 mg KOH / g Feststoffgehalt und der pH-Wert bei 7,0 (gemessen bei 23°C).

### Beispiel D-P3

### Herstellung einer Dispersion eines gesättigten Polyetherurethans mit Polytetramethylenoxidsegmenten

In einem Reaktionsgefäß, ausgerüstet mit Rührer, Innenthermometer, Rückflußkühler und elektrischer Heizung wurden 685,8 Gewichtsteile eines linearen alpha, omega - Hydroxy-terminierten Polytetramethylenoxids (PolyTHF® 2000, Fa. BASF SE) mit einer Hydroxylzahl von 56,1 mg KOH / g Festanteil und einem zahlenmittleren Molekulargewicht von 2000 g/mol, 138,0 Gewichtsteile Dimethylolpropionsäure (Fa. GEO Speciality Chemicals), 0,01 Gewichtsteile Dibutylzinndilaurat und 685,8 Gewichtsteile Methylethylketon unter Stickstoff bei 70°C gelöst. Zu der resultierenden Lösung wurden 418,8 Gewichtsteile m-Tetramethylxyloldiisocyanat (TMXDI® (Meta) Aliphatic Isocyanate, Fa. Cytec) mit einem Isocyanatgehalt von 34,4 Gew.-% hinzugegeben. Anschließend wurde das Reaktionsgemisch unter Rühren langsam auf 80°C erwärmt und weiter gehalten, bis der Isocyanatgehalt der Lösung 1,8 Gew.-% betrug und konstant war. Danach wurden zur Reaktionsmischung rasch 87,4 Gewichtsteile Trimethylolpropan (Fa. BASF SE) und 26,1 Gewichtsteile Methylethylketon hinzugegeben. Die resultierende Reaktionsmischung wurde so lange bei 80°C gerührt, bis keine freien Isocyanatgruppen mehr nachweisbar waren. Das resultierende, gelöste Polyurethan wurde mit 41,2 Gewichtsteilen Dimethylethanolamin versetzt und weiter 60 Minuten gerührt. Danach wurde die Reaktionsmischung während 30 Minuten in ein zweites Reaktionsgefäß unter fortwährendem Rühren vollständig überführt, in dem 1732 Gewichtsteile deionisiertes Wasser bereits vorgelegt war, welches zuvor auf 70°C angewärmt wurde. Aus der resultierenden Dispersion wurde das Methylethylketon bei 60°C unter Vakuum abdestilliert. Hiernach wurden eventuelle Wasserverluste ausgeglichen.

Die so erhaltene Polyurethandispersion wies einen Feststoffgehalt von 38,0 Gew-% auf, die Säurezahl lag bei 43,0 mg KOH / g Feststoffgehalt und der pH-Wert bei 6,2 (gemessen bei 23°C).

### Beispiel D-P4

### Herstellung einer bekannten Dispersion eines Schwefel-haltigen, gesättigten Polyesterurethans

Gemäß EP1330480B1 wurde aus dem Polyesterpolyol nach Herstellbeispiel 1, Seite 15, ein Polyurethanpräpolymer nach Herstellbeispiel 2, Seite 15, hergestellt, welches nach Beispiel 1, Seite 16 "Die Herstellung eines erfindungsgemäßen Polyurethans und einer wässrigen Dispersion hiervon", mit Thiodiethanol umgesetzt wurde und nach Neutralisation mit Triethylamin in eine wässrige Polyurethandispersion überführt wurde. Aus der resultierenden Dispersion wurde das Methylethylketon bei 60°C unter Vakuum abdestilliert. Hiernach wurden eventuelle Wasserverluste ausgeglichen.

Die auf diese Weise erhaltene Dispersion eines Schwefel-haltigen Polyurethans wies einen Feststoffgehalt von 27,3 Gew-% auf, die Säurezahl lag bei 34,4 mg KOH / g Feststoffgehalt, der Neutralisationsgrad bei 84% und der pH-Wert bei 7,1 (gemessen bei 23°C).

### Polyurethan-Polyacrylat-Mischpolymerisat-Dispersionen

### Beispiel D-A1

### Herstellung einer Primärdispersion eines Polyesterurethan-Polyacrylat-Mischpolymerisats, ausgehend von einem ungesättigten Polyesterurethan mit alpha-Methylstyryl-Gruppen

In Anlehnung an die Patentschrift DE 19948004 B4, Seite 27, Beispiel 2, "Die Herstellung der Primärdispersion eines erfindungsgemäßen Mischpolymerisats 1" und Patentschrift EP1218434B1, Seite 24, Beispiel 2, "Die Herstellung der Primärdispersion eines erfindungsgemäßen Pfropfmischpolymerisats 1" wurden unter Stickstoffatmosphäre 1937,8 Gewichtsteile der Polyurethandispersion gemäß Beispiel DP-1 mit 856,9 Gewichtsteilen deionisiertem Wasser verdünnt und auf 85°C erhitzt. Bei dieser Temperatur wurde unter Normaldruck der Dispersion unter Rühren ein Gemisch aus 160,7 Gewichtsteilen Styrol, 160,7 Gewichtsteilen Methylmethacrylat, 120,3 Gewichtsteilen n-Butylacrylat und 120,3 Gewichtsteilen Hydroxyethylmethacrylat während 3,5 Stunden gleichmäßig zugegeben. Mit Beginn der Zugabe der Monomermischung wurde eine Lösung von 8,4 Gewichtsteilen tert.-Butylperoxyethylhexanoat in 134,9 Gewichtsteilen Methoxypropanol innerhalb von vier Stunden zugegeben. Die resultierende Reaktionsmischung wurde bei 85°C so lange weiter gerührt, bis alle Monomeren abreagiert waren (Gesamtgehalt Monomer (GC) bezogen auf Dispersion. < 0,1%).

Während der radikalischen Polymerisation wurde im 30 Minuten - Takt der Gehalt an freien Monomeren mittels Gaschromatographie (GC) bestimmt (GC: 50m Silica-Kapillarsäule mit Polyethylenglykol-Phase bzw. 50m Silica-Kapillarsäule mit Polydimethylsiloxan-Phase, Trägergas Helium, Splitinjektor 150°C, Ofentemperatur 40 - 220°C, Flammionisationsdetektor, Detektortemperatur 275°C, interner Standard Isobutylacrylat), wobei nach 30 min der höchste Gesamtgehalt Monomer bezogen auf Dispersion mit 1,8 Gew.-% ermittelt wurde (11,1 Gew.-% bezogen auf Vinylmonomer).

Die resultierende Primärdispersion des Mischpolymerisats wies, wie im Originalbeispiel beschrieben, eine sehr gute Lagerstabilität auf. Ihr Feststoffgehalt lag bei 32,5 Gew.-%, die Säurezahl bei 18,3 mg KOH / g Feststoffgehalt und ihr pH-Wert bei 7,2 (gemessen bei 23°C). Die Teilchengröße (z-Mittel) mittels Photokorrelationsspektroskopie betrug 104 nm. Mittels Gaschromatographie (GC: 50m Silica-Kapillarsäule mit Polyethylenglykol-Phase bzw. 50m Silica-Kapillarsäule mit Polydimethylsiloxan-Phase, Trägergas Helium, Splitinjektor 250°C, Ofentemperatur 40 - 220°C, Flammionisationsdetektor, Detektortemperatur 275°C, interner Standard n-Propylglykol) wurde ein Gehalt von 6,0 Gew.-% Methoxypropanol und 1,7 Gew.-% N-Methylpyrrolidon ermittelt.

Der Gelanteil wurde gravimetrisch nach Extraktion des gefriergetrockneten Polymeren mittels Tetrahydrofuran mit 71,5 Gew.-% ermittelt. Dazu wurde die Dispersion gefriergetrocknet, die Masse des gefriergetrockneten Polymeren bestimmt, um das Polymer anschließend 24 Stunden bei 25°C in einem Überschuss an Tetrahydrofuran (Verhältnis Tetrahydrofuran zu gefriergetrocknetem Mischpolymerisat = 300 : 1) zu extrahieren. Der unlösliche Anteil (Gelanteil) wurde isoliert, 4 Stunden bei 50°C im Umluftofen getrocknet, und anschließend zurückgewogen.

### Beispiel D-A2

### Herstellung einer Primärdispersion eines Polyesterurethan-Polyacrylat-Mischpolymerisats, ausgehend von einem gesättigten Polyesterurethan mit Isotridecyl-Gruppen

Analog zum Herstellungsbeispiel D-A1 wurde eine Primärdispersion unter gewichtsmäßigem Austausch der Polyurethandispersion mit alpha-Methylstyryl-Gruppen gemäß Herstellungsbeispiel D-P1 gegen die Polyurethandispersion mit Isotridecyl-Gruppen hergestellt gemäß Herstellungsbeispiel D-P2.

Während der radikalischen Polymerisation wurde im 30 Minuten - Takt der Gehalt an freien Monomeren mittels Gaschromatographie bestimmt analog zu Beispiel D-A1, wobei nach 30 min der höchste Gesamtgehalt Monomer bezogen auf Dispersion mit 2,0 Gew.-% ermittelt wurde (12,4 Gew.-% bezogen auf Vinylmonomer).

Die resultierende Primärdispersion des Mischpolymerisats wies eine sehr gute Lagerstabilität auf. Ihr Feststoffgehalt lag bei 32,2 Gew.-%, die Säurezahl bei 18,1 mg KOH / g Feststoffgehalt und ihr pH-Wert bei 7,3 (gemessen bei 23°C). Die Teilchengröße (z-Mittel) mittels Photokorrelationsspektroskopie betrug 112 nm. Analog zum Beispiel D-A1 wurde mittels Gaschromatographie ein Gehalt von 5,7 Gew.-% Methoxypropanol und 1,2 Gew.-% N-Methylpyrrolidon ermittelt.

Der Gelanteil wurde analog zum Beispiel D-A1 gravimetrisch nach Extraktion mittels Tetrahydrofuran mit 70,2 Gew.-% ermittelt.

### Beispiel D-A3

### Herstellung einer Primärdispersion eines Polyesterurethan-Polyacrylat-Mischpolymerisats (Comonomer Isopren), ausgehend von einem ungesättigten Polyesterurethan mit alpha-Methylstyryl-Gruppen

Wie im Herstellungsbeispiel D-A1 wurde eine Primärdispersion eines Mischpolymerisats hergestellt, jedoch 15 Mol-% der vinylischen Monomeren gegen Isopren ausgetauscht: So wurden 1937,8 Gewichtsteile der Polyurethandispersion gemäß Herstellungsbeispiel D-P1 mit 857,0 Gewichtsteilen deionisiertem Wasser verdünnt und auf 85°C erhitzt. Bei dieser Temperatur wurde der Dispersion unter Rühren ein Gemisch aus 145,2 Gewichtsteilen Styrol, 145,2 Gewichtsteilen Methylmethacrylat, 108,7 Gewichtsteilen n-Butylacrylat, 108,7 Gewichtsteilen Hydroxyethylmethacrylat und 54,3 Gewichtsteilen Isopren während 3,5 Stunden unter 3 bar Stickstoffüberdruck gleichmäßig zugegeben. Mit Beginn der Zugabe der Monomermischung wurde eine Lösung von 8,4 Gewichtsteilen tert.-Butylperoxyethylhexanoat in 134,9 Gewichtsteilen Methoxypropanol innerhalb von vier Stunden zugegeben. Die resultierende Reaktionsmischung wurde bei 85°C so lange weiter gerührt, bis alle Monomeren abreagiert waren.

Die resultierende Primärdispersion wies eine sehr gute Lagerstabilität auf. Ihr Feststoffgehalt lag bei 32,3 Gew.-%, die Säurezahl bei 18,3 mg KOH / g und ihr pH-Wert bei 7,2 (gemessen bei 23°C). Die Teilchengröße (z-Mittel) mittels Photokorrelationsspektroskopie betrug 115 nm. Analog zum Beispiel D-A1 wurde mittels Gaschromatographie ein Gehalt von 6,0 Gew.-% Methoxypropanol und 1,7 Gew.-% N-Methylpyrrolidon ermittelt.

Der Gelanteil wurde analog zum Beispiel D-A1 gravimetrisch nach Extraktion mittels Tetrahydrofuran mit 70,8 Gew.-% ermittelt.

### Beispiel D-A4

### Herstellung einer Primärdispersion eines Polyesterurethan-Polyacrylat-Mischpolymerisats (ohne Comonomer Styrol), ausgehend von einem ungesättigten Polyesterurethan mit alpha-Methylstyryl-Gruppen

Wie im Herstellungsbeispiel D-A1 wurde eine Primärdispersion eines Mischpolymerisats hergestellt, jedoch der Anteil Styrol gewichtsmäßig durch Methylmethacrylat ersetzt und der Feststoffgehalt auf 28% abgesenkt:
So wurden unter Stickstoffatmosphäre 1689,6 Gewichtsteile der Polyurethandispersion mit 1133,5 Gewichtsteilen deionisiertem Wasser und 142,4 Gewichtsteilen N-Methylpyrrolidon verdünnt und auf 85°C erhitzt. Bei dieser Temperatur wurde unter Normaldruck der Dispersion unter Rühren ein Gemisch aus 280,3 Gewichtsteilen Methylmethacrylat, 104,9 Gewichtsteilen n-Butylacrylat und 104,9 Gewichtsteilen Hydroxyethylmethacrylat während 3,5 Stunden gleichmäßig zugegeben. Mit Beginn der Zugabe der Monomermischung wurde eine Lösung von 7,4 Gewichtsteilen tert.-Butylperoxyethylhexanoat in 37,0 Gewichtsteilen Methoxypropanol innerhalb von vier Stunden zugegeben. Die resultierende Reaktionsmischung wurde bei 85°C so lange weiter gerührt, bis alle Monomeren abreagiert waren.

Während der radikalischen Polymerisation wurde im 30 Minuten - Takt der Gehalt an freien Monomeren analog zum Beispiel D-A1 mittels Gaschromatographie bestimmt, wobei nach 30 min der höchste Gesamtgehalt Monomer bezogen auf Dispersion mit 1,0 Gew.-% ermittelt wurde (7,1 Gew.-% bezogen auf Vinylmonomer).

Die resultierende Primärdispersion des Mischpolymerisats wies wie die Styrol-haltige Dispersion eine sehr gute Lagerstabilität auf. Ihr Feststoffgehalt wurde auf 28,0 Gew.-% eingestellt, die Säurezahl bei 18,1 mg KOH / g Feststoffgehalt und ihr pH-Wert bei 7,2 (gemessen bei 23°C). Die Teilchengröße (z-Mittel) mittels Photokorrelationsspektroskopie betrug 102 nm. Analog zum Beispiel D-A1 wurde mittels Gaschromatographie wurde ein Gehalt von 2,8 Gew.-% Methoxypropanol und 5,8 Gew.-% N-Methylpyrrolidon ermittelt. Der Gelanteil wurde analog zum Beispiel DA1 gravimetrisch nach Extraktion mittels Tetrahydrofuran mit 72,0 Gew.-% ermittelt.

### Beispiel D-A5

### Herstellung einer Primärdispersion eines Polyesterurethan-Polyacrylat-Mischpolymerisats, ausgehend von einem gesättigten, Schwefel-haltigen Polyesterurethan (Lösungsmittel-frei)

Gemäß EP1330480B1, Beispiel 2, Seite 16, "Die Herstellung der Primärdispersion eines erfindungsgemäßen Polymergemischs", wurden unter Stickstoffatmosphäre 2285,8 Gewichtsteile der Polyurethandispersion gemäß Beispiel DP-4 vorgelegt und auf 82°C erhitzt. Bei dieser Temperatur wurde unter Normaldruck der Dispersion unter Rühren ein Gemisch aus 118,8 Gewichtsteilen Styrol, 207,7 Gewichtsteile Hydroxypropylmethacrylat, 59,8 Gewichtsteilen n-Butylacrylat, 88,9 Gewichtsteilen Methylmethacrylat und 118,8 Gewichtsteilen tert.-Butylcyclohexylacrylat während 4 Stunden gleichmäßig zugegeben. Mit Beginn der Zugabe der Monomermischung wurden 29,9 Gewichtsteile tert.-Butylperoxyethylhexanoat innerhalb von 4,5 Stunden zugegeben. Nach Beendigung des Initiatorzulaufs wurde bei 82°C eine Stunde nachpolymerisiert. Während der radikalischen Polymerisation wurde im 30 Minuten - Takt der Gehalt an freien Monomeren analog zum Beispiel D-A1 mittels Gaschromatographie bestimmt, wobei nach 30 min der höchste Gesamtgehalt Monomer bezogen auf eine 41,9 Gew.-%ige Dispersion mit 1,6 Gew.-% ermittelt wurde (7,6 Gew.-% bezogen auf Vinylmonomer).
Die resultierende Primärdispersion wurde mit 590,3 Gewichtsteilen Wasser weiter verdünnt, so dass ein Feststoffgehalt wie in EP1330480B1, Beispiel 2, von 34,8 Gew.-% resultierte.

Die Säurezahl lag bei 19,6 mg KOH / g Feststoffgehalt und der pH-Wert der Dispersion bei 7,4 (gemessen bei 23°C). Der Neutralisationsgrad lag bei 80,2%. Die Teilchengröße (z-Mittel) mittels Photokorrelationsspektroskopie betrug 83 nm. Die resultierende Dispersion enthielt kein Lösungsmittel.

Der Gelanteil wurde analog zum Beispiel D-A1 gravimetrisch nach Extraktion mittels Tetrahydrofuran mit 0,0 Gew.-% ermittelt.

### Beispiel D-A6

### Herstellung einer Primärdispersion eines Polyesterurethan-Polyacrylat-Mischpolymerisats, ausgehend von einem gesättigten, Schwefel-haltigen Polyesterurethan und Zusatz von Methoxypropanol und N-Methylpyrrolidon

Analog zum Beispiel D-A5 wurde ein Mischpolymerisat hergestellt.

Die resultierende Primärdispersion mit einem Feststoffgehalt von 41,9 Gew.-% wurde nach dem Ende der Nachpolymerisation mit 77,0 Gewichtsteilen Methoxypropanol, 206,5 Gew.-% N-Methylpyrrolidon und 306,8 Gewichtsteilen Wasser so weiter verdünnt, so dass analog zum Vergleichsbeispiel D-A5 ein Feststoffgehalt von 34,8 Gew.-% resultierte.

Die Säurezahl lag bei 18,5 mg KOH / g Feststoffgehalt und ihr pH-Wert bei 7,2 (gemessen bei 23°C). Der Neutralisationsgrad lag bei 80,0%. Die Teilchengröße (z-Mittel) mittels Photokorrelationsspektroskopie betrug 81 nm. Mittels Gaschromatographie wurde analog zu Beispiel D-A1 ein Gehalt von 2,2 Gew.-% Methoxypropanol und 5,9 Gew.-% N-Methylpyrrolidon ermittelt. Es konnte wie in Beispiel D-A5 kein Gelanteil ermittelt werden (Gelanteil = 0,0 Gew.-%).

### Beispiel D-B1

### Herstellung einer erfindungsgemäßen Primärdispersion eines Polyesterurethan-Polyacrylat-Mischpolymerisats, ausgehend von einem ungesättigten Polyesterurethan mit alpha-Methylstyryl-Gruppen

Zur Herstellung der Primärdispersion eines erfindungsgemäßen Mischpolymerisats wurden unter Stickstoffatmosphäre 1961,2 Gewichtsteile der alpha-Methylstyryl-haltigen Polyurethandispersion gemäß Herstellungsbeispiel D-P1 mit 40,0 Gewichtsteilen Methoxypropanol (0,07% auf Polyurethan) und 686,5 Gewichtsteilen deionisiertem Wasser verdünnt und auf 80°C erhitzt. Nachdem der Reaktorinhalt auf 80°C temperiert wurde, wurden 0,6 Gewichtsteile Ammoniumperoxodisulfat, gelöst in 35,7 Gewichtsteilen deionisiertem Wasser, unter Normaldruck in den Reaktor gegeben. Anschließend wurde unter fortwährendem Rühren ein Gemisch aus 301,6 Gewichtsteilen Methylmethacrylat, 261,6 Gewichtsteilen n-Butylacrylat, 5,6 Gewichtsteilen Allylmethacrylat (0,87 Mol-% bezogen auf Gesamtvinylmonomer) und 134,9 Gewichtsteilen N-Methylpyrrolidon während fünf Stunden gleichmäßig zugegeben. Mit Beginn der Zugabe der Monomermischung wurde eine Lösung von 1,1 Gewichtsteilen Ammoniumperoxodisulfat in 71,3 Gewichtsteilen deionisiertem Wasser ebenfalls innerhalb von fünf Stunden zugegeben.

Während der radikalischen Polymerisation wurde im 30 Minuten - Takt der Gehalt an freien Monomeren analog zum Beispiel D-A1 mittels Gaschromatographie bestimmt, wobei nach 30 min der höchste Gesamtgehalt Monomer bezogen auf Dispersion mit 0,5 Gew.-% ermittelt wurde (3,1 Gew.-% bezogen auf Vinylmonomer).

Nach gleichzeitigem Ende der Monomer- und Initiatordosierung wurde die resultierende Reaktionsmischung bei 80°C eine weitere Stunde gerührt und anschließend auf Raumtemperatur abgekühlt.

Die resultierende Primärdispersion des Mischpolymerisats wies eine sehr gute Lagerstabilität auf. Ihr Feststoffgehalt lag bei 32,5 Gew.-%, die Säurezahl bei 18,8 mg KOH / g Feststoffgehalt und ihr pH-Wert bei 7,0. Die Teilchengröße (z-Mittel) mittels Photokorrelationsspektroskopie betrug 96 nm. Analog zum Beispiel D-A1 wurde mittels Gaschromatographie ein Gehalt von 2,7 Gew.-% Methoxypropanol und 5,7 Gew.-% N-Methylpyrrolidon ermittelt.

Der Gelanteil wurde analog zum Beispiel D-A1 gravimetrisch nach Extraktion mittels Tetrahydrofuran mit 80,3 Gew.-% ermittelt.

### Beispiel D-B2

### Herstellung einer erfindungsgemäßen Primärdispersion eines Polyesterurethan-Polyacrylat-Mischpolymerisats, ausgehend von einem gesättigten Polyesterurethan mit Isotridecyl-Gruppen

Analog zum Herstellungsbeispiel D-B1 wurde eine Primärdispersion unter gewichtsmäßigen Austausch der Polyurethandispersion mit alpha-Methylstyryl-Gruppen gemäß Herstellungsbeispiel D-P1 gegen die Polyurethandispersion mit Isotridecyl-Gruppen gemäß Herstellungsbeispiel D-P2 hergestellt. Während der radikalischen Polymerisation wurde im 30 Minuten - Takt der Gehalt an freien Monomeren analog zum Beispiel D-A1 mittels Gaschromatographie bestimmt, wobei nach 30 min der höchste Gesamtgehalt Monomer bezogen auf Dispersion mit 0,5 Gew.-% ermittelt wurde (3,1 Gew.-% bezogen auf Vinylmonomer).

Die resultierende Primärdispersion des Mischpolymerisats wies eine sehr gute Lagerstabilität auf. Ihr Feststoffgehalt lag bei 32,4 Gew.-%, die Säurezahl bei 18,4 mg KOH / g Feststoffgehalt und ihr pH-Wert bei 6,9 (gemessen bei 23°C). Die Teilchengröße (z-Mittel) mittels Photokorrelationsspektroskopie betrug 102 nm. Analog zum Beispiel D-A1 wurde mittels Gaschromatographie wurde ein Gehalt von 2,4 Gew.-% Methoxypropanol und 5,1 Gew.-% N-Methylpyrrolidon ermittelt.

Der Gelanteil wurde analog zum Beispiel D-A1 gravimetrisch nach Extraktion mittels Tetrahydrofuran mit 79,1 Gew.-% ermittelt.

### Beispiel D-B3

### Herstellung einer erfindungsgemäßen Primärdispersion eines Polyesterurethan-Polyacrylat-Mischpolymerisats (Comonomer Isopren), ausgehend von einem ungesättigten Polyesterurethan mit alpha-Methylstyryl-Gruppen

Wie im Herstellbeispiel D-B1 wurde erfindungsgemäß eine Primärdispersion eines Mischpolymerisats hergestellt, jedoch 15 Mol-% der vinylischen Monomeren gegen Isopren ausgetauscht: So wurden 1961,2 Gewichtsteile der alpha-Methylstyryl-haltigen Polyurethandispersion gemäß Herstellungsbeispiel D-P1 mit 40,0 Gewichtsteilen Methoxypropanol und 686,5 Gewichtsteilen deionisiertem Wasser verdünnt und auf 80°C erhitzt. Bei 80°C wurden 0,6 Gewichtsteile Ammoniumperoxodisulfat, gelöst in 35,7 Gewichtsteilen deionisiertem Wasser, unter 3 bar Stickstoffüberdruck in den Reaktor gegeben. Anschließend wurde unter Druckhaltung und fortwährendem Rühren ein Gemisch aus 271,8 Gewichtsteilen Methylmethacrylat, 235,7 Gewichtsteilen n-Butylacrylat, 5,9 Gewichtsteilen Allylmethacrylat (0,87 Mol-% bezogen auf Gesamtvinylmonomer), 55,3 Gewichtsteilen Isopren und 134,9 Gewichtsteilen N-Methylpyrrolidon während sechs Stunden gleichmäßig zugegeben. Mit Beginn der Zugabe der Monomermischung wurde eine Lösung von 1,1 Gewichtsteilen Ammoniumperoxodisulfat in 71,3 Gewichtsteilen deionisiertem Wasser ebenfalls innerhalb von sechs Stunden zugegeben. Nach gleichzeitigem Ende der Monomer- und Initiatordosierung wurde die resultierende Reaktionsmischung bei 80°C eine weitere Stunde gerührt und anschließend auf Raumtemperatur abgekühlt.

Die resultierende Primärdispersion des Pfropfmischpolymerisats wies eine sehr gute Lagerstabilität auf. Ihr Feststoffgehalt lag bei 32,2 Gew.-%, die Säurezahl bei 18,8 mg KOH / g Feststoffgehalt und ihr pH-Wert bei 7,0 (gemessen bei 23°C). Die Teilchengröße (z-Mittel) mittels Photokorrelationsspektroskopie betrug 97 nm. Analog zum Beispiel D-A1 wurde mittels Gaschromatographie wurde ein Gehalt von 2,8 Gew.-% Methoxypropanol und 5,6 Gew.-% N-Methylpyrrolidon ermittelt.

Der Gelanteil wurde analog zum Beispiel D-A1 gravimetrisch nach Extraktion mittels Tetrahydrofuran mit 78,0 Gew.-% ermittelt.

### Beispiel D-B4

### Herstellung einer erfindungsgemäßen Primärdispersion eines Polyesterurethan-Polyacrylat-Mischpolymerisats, ausgehend von einem ungesättigten Polyesterurethan mit alpha-Methylstyryl-Gruppen

Zur Herstellung der Primärdispersion eines erfindungsgemäßen Mischpolymerisats wurden unter Stickstoffatmosphäre 1689,7 Gewichtsteile der alpha-Methylstyryl-haltigen Polyurethandispersion gemäß Herstellungsbeispiel D-P1 mit 40,3 Gewichtsteilen Methoxypropanol (0,08% auf Polyurethan) und 993,8 Gewichtsteilen deionisiertem Wasser verdünnt und auf 80°C erhitzt. Nachdem der Reaktorinhalt auf 80°C temperiert wurde, wurden 0,7 Gewichtsteile Ammoniumperoxodisulfat, gelöst in 46,1 Gewichtsteilen deionisiertem Wasser, unter Normaldruck in den Reaktor gegeben. Anschließend wurde unter fortwährendem Rühren gemäß Vergleichsbeispiel D-A4 ein Gemisch aus 277,6 Gewichtsteilen Methylmethacrylat, 103,8 Gewichtsteilen n-Butylacrylat und 103,8 Gewichtsteilen Hydroxyethylmethacrylat und zusätzlich 4,8 Gewichtsteilen Allylmethacrylat (0,86 Mol-% bezogen auf Gesamtvinylmonomer) zusammen mit 145,7 Gewichtsteilen N-Methylpyrrolidon während fünf Stunden gleichmäßig zugegeben. Mit Beginn der Zugabe der Monomermischung wurde eine Lösung von 1,5 Gewichtsteilen Ammoniumperoxodisulfat in 92,2 Gewichtsteilen deionisiertem Wasser ebenfalls innerhalb von fünf Stunden zugegeben.

Während der radikalischen Polymerisation wurde im 30 Minuten - Takt der Gehalt an freien Monomeren analog zum Beispiel D-A1 mittels Gaschromatographie bestimmt, wobei nach 30 min der höchste Gesamtgehalt Monomer bezogen auf Dispersion mit 0,5 Gew.-% ermittelt wurde (3,6 Gew.-% bezogen auf Vinylmonomer).

Nach gleichzeitigem Ende der Monomer- und Initiatordosierung wurde die resultierende Reaktionsmischung bei 80°C eine weitere Stunde gerührt und anschließend auf Raumtemperatur abgekühlt.

Die resultierende Primärdispersion des Mischpolymerisats wies eine sehr gute Lagerstabilität auf. Ihr Feststoffgehalt lag bei 28,0 Gew.-%, die Säurezahl bei 18,2 mg KOH / g Feststoffgehalt und ihr pH-Wert bei 7,0. Die Teilchengröße (z-Mittel) mittels Photokorrelationsspektroskopie betrug 110 nm. Analog zum Beispiel D-A1 wurde mittels Gaschromatographie ein Gehalt von 2,9 Gew.-% Methoxypropanol und 5,9 Gew.-% N-Methylpyrrolidon ermittelt. Der Gelanteil wurde analog zum Beispiel DA1 gravimetrisch nach Extraktion mittels Tetrahydrofuran mit 81,2 Gew.-% ermittelt.

### Beispiel D-B5

### Herstellung einer erfindungsgemäßen Primärdispersion eines Polyesterurethan-Polyacrylat-Mischpolymerisats, ausgehend von einem gesättigten, Schwefel-haltigen Polyesterurethan (Lösemittelhaltig)

Zur Herstellung der Primärdispersion eines erfindungsgemäßen Mischpolymerisats wurden unter Stickstoffatmosphäre 2101,9 Gewichtsteile der Polyurethandispersion gemäß Vergleichsbeispiel DP-4 mit 40,1 Gewichtsteilen Methoxypropanol (0,07% auf Polyurethane) und 513,3 Gewichtsteilen deionisiertem Wasser verdünnt und auf 80°C erhitzt. Nachdem der Reaktorinhalt auf 80°C temperiert wurde, wurden 1,1 Gewichtsteile Ammoniumperoxodisulfat, gelöst in 36,4 Gewichtsteilen deionisiertem Wasser, unter Normaldruck in den Reaktor gegeben. Anschließend wurde unter fortwährendem Rühren gemäß Vergleichsbeispiele D-A5 und D-A6 ein Gemisch 108,3 Gewichtsteilen Styrol, 189,4 Gewichtsteile Hydroxypropylmethacrylat, 54,6 Gewichtsteilen n-Butylacrylat, 81,1 Gewichtsteilen Methylmethacrylat, 108,3 Gewichtsteilen tert.-Butylcyclohexylacrylat und zusätzlich 4,5 Gewichtsteile Allylmethacrylat (0,87 Mol-% bezogen auf Gesamtvinylmonomer) zusammen mit 186,0 Gewichtsteilen N-Methylpyrrolidon während fünf Stunden gleichmäßig zugegeben. Mit Beginn der Zugabe der Monomermischung wurde eine Lösung von 2,2 Gewichtsteilen Ammoniumperoxodisulfat in 72,8 Gewichtsteilen deionisiertem Wasser ebenfalls innerhalb von fünf Stunden zugegeben. Während der radikalischen Polymerisation wurde im 30 Minuten - Takt der Gehalt an freien Monomeren analog zum vorhergehenden Beispiel mittels Gaschromatographie bestimmt, wobei nach 30 min der höchste Gesamtgehalt Monomer bezogen auf Dispersion mit 0,6 Gew.-% ermittelt wurde (3,7 Gew.-% bezogen auf Vinylmonomer).

Nach gleichzeitigem Ende der Monomer- und Initiatordosierung wurde die resultierende Reaktionsmischung bei 80°C eine weitere Stunde gerührt und anschließend auf Raumtemperatur abgekühlt.

Die resultierende Primärdispersion des Mischpolymerisats wies eine gute Lagerstabilität auf. Ihr Feststoffgehalt lag bei 33,0 Gew.-%, die Säurezahl bei 20,1 mg KOH / g Feststoffgehalt und ihr pH-Wert bei 7,0. Die Teilchengröße (z-Mittel) mittels Photokorrelationsspektroskopie betrug 72 nm. Analog zum Beispiel D-A1 wurde mittels Gaschromatographie ein Gehalt von 2,1 Gew.-% Methoxypropanol und 6,0 Gew.-% N-Methylpyrrolidon ermittelt.

Der Gelanteil wurde analog zum Beispiel D-A1 gravimetrisch nach Extraktion mittels Tetrahydrofuran mit 42,1 Gew.-% ermittelt.

### Beispiel D-C1

### Herstellung einer erfindungsgemäßen Primärdispersion eines Polyetherurethan-Polyacrylat-Mischpolymerisats, ausgehend von einem gesättigten Polyetherurethan

Zur Herstellung der Primärdispersion eines erfindungsgemäßen Mischpolymerisats wurden unter Stickstoffatmosphäre 1496,7 Gewichtsteile einer Polytetramethylenoxid-haltigen Polyurethandispersion gemäß Herstellungsbeispiel D-P3 mit 40,0 Gewichtsteilen Methoxypropanol (0,07% auf Polyurethane) und 1150,9 Gewichtsteilen deionisiertem Wasser verdünnt und auf 80°C erhitzt. Nachdem der Reaktorinhalt auf 80°C temperiert wurde, wurden 0,6 Gewichtsteile Ammoniumperoxodisulfat, gelöst in 35,7 Gewichtsteilen deionisiertem Wasser, unter Normaldruck in den Reaktor gegeben. Anschließend wurde unter fortwährendem Rühren ein Gemisch aus 301,6 Gewichtsteilen Methylmethacrylat, 261,6 Gewichtsteilen n-Butylacrylat, 5,6 Gewichtsteilen Allylmethacrylat (0,87 Mol-%) und 134,9 Gewichtsteilen N-Methylpyrrolidon während sechs Stunden gleichmäßig zugegeben. Mit Beginn der Zugabe der Monomermischung wurde eine Lösung von 1,1 Gewichtsteilen Ammoniumperoxodisulfat in 71,3 Gewichtsteilen deionisiertem Wasser ebenfalls innerhalb von sechs Stunden zugegeben. Nach gleichzeitigem Ende der Monomer- und Initiatordosierung wurde die resultierende Reaktionsmischung bei 80°C eine weitere Stunde gerührt und anschließend auf Raumtemperatur abgekühlt.

Die resultierende Primärdispersion des Mischpolymerisats wies eine sehr gute Lagerstabilität auf. Ihr Feststoffgehalt lag bei 32,8 Gew.-%, die Säurezahl bei 23,2 mg KOH / g Feststoffgehalt und ihr pH-Wert bei 6,2. Analog zum Beispiel D-A1 wurde mittels Gaschromatographie ein Gehalt von 1,1 Gew.-% Methoxypropanol und 3,9 Gew.-% N-Methylpyrrolidon ermittelt. Die Teilchengröße (z-Mittel) mittels Photokorrelationsspektroskopie betrug 103 nm. Der Gelanteil wurde analog zum Beispiel D-A1 gravimetrisch nach Extraktion mittels Tetrahydrofuran mit 85,2 Gew.-% ermittelt.

### Transmissionselektronenmikroskopie an unpigmentierten Polymerfilmen von Isopren-haltigen Polyurethan - Polyacrylat - Mischpolymerisaten

Zur Untersuchung der Morphologie wurden freie Filme der Primärdispersionen erzeugt, diese mittels Osmiumtetroxid kontrastiert und mit Hilfe eines Transmissionselektronenmikroskops untersucht.

Zu diesem Zweck wurde jeweils ein Tropfen der Primärdispersion in 10 ml deionisiertes Wasser gegeben und gut verrührt. Anschließend wurde mit der Oberfläche eines Kupfernetzchens ein Tropfen der so entstandenen, hochverdünnten Primärdispersion aufgenommen und der Polymerfilm im Hochvakuum getrocknet. Anschließend erfolgte die Kontrastierung des Films in einer Osmiumtetroxid-angereicherten Atmosphäre in einem geschlossenen Gefäß.

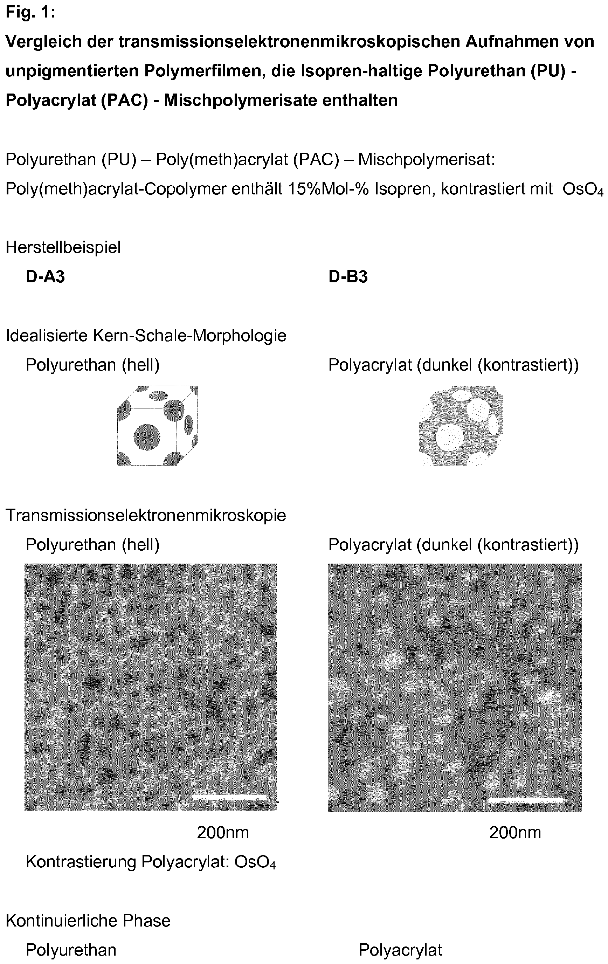

Die elektronenmikroskopische Untersuchung erfolgte in Transmission (Tab. 1, Fig. 1). Dabei wurden sphärische Partikel mit Partikelgrößen kleiner 150 nm in einer kontinuierlichen, dunkel bzw. hell erscheinenden Matrix sichtbar, die einer Kern-Schale-Morphologie entsprechen:

**Tab. 1:**

| | | | |
|---|---|---|---|
| **Transmissionselektronenmikroskopie von unpigmentierten Polymerfilmen, die Isopren-haltige Polyurethan (PU)-Polyacrylat (PAC)-Mischpolymerisate enthalten** | | | |

| Polyurethan (PU)- Polyacrylat (PAC)- Mischpolymerisat | | | |
|---|---|---|---|
| Herstellbeispiel | | D-A3 | D-B3 |
| Enthält Polyurethandispersion | | D-P1 | D-P1 |
| Anteil Polyurethan | in % Festanteil pro Gesamtfestkörper | 50 | 50 |
| Anteil Isopren im | in Mol-% | 15 | 15 |
| Polyacrylat-Copolymer | | | |

| Polymerfilm (unpigmentiert, im Hochvakuum getrocknet) | | | |
|---|---|---|---|
| Transmissionselektronenmikroskopie | | | |
| (Kontrastierung Polyacrylat: OsO4) | | | |
| Aussehen kontinuierliche Phase | | hell | dunkel |
| Aussehen diskontinuierliche Phase | | dunkel | hell |
| Morphologie | | Kern-Schale | Kern-Schale |

Der obige Versuch zeigt, dass der Kern-Schale-Aufbau der Mischpolymerisate der erfindungsgemäßen Dispersionen (D-B3), invers zu dem Aufbau der aus dem Stand der Technik bekannten Mischpolymerisate ist (D-A3).

### Herstellung von silberfarbigen Wasserbasislacken

Die in den Tabellen 2a, 2b, 3a und 3b unter "wässrige Phase" aufgeführten Komponenten werden in der angegebenen Reihenfolge zu einer wässrigen Mischung zusammengerührt. Im nächsten Schritt wird aus dem unter "organische Phase" aufgeführten Komponenten eine organische Mischung hergestellt. Die organische Mischung wird zur wässrigen Mischung gegeben. Sodann wird 10 min lang gerührt und mit Hilfe von deionisiertem Wasser und N,N-Dimethylethanolamin (Fa. BASF SE) auf einen pH-Wert von 8,0 und Spritzviskosität eingestellt.

**Tab. 2a:**

| | | | | | | |
|---|---|---|---|---|---|---|
| **Herstellung von silberfarbenen Wasserbasislacken für die Ermittlung der Nadelstichgrenze und Nadelstichanzahl, sowie der Sichtbarkeit der Schleifkreuze in einer Mehrschichtlackierungen** | | | | | | |

| **Bezeichnung des Wasserbasislacks** | **BL-A0** | **BL-A1** | **BL-A2** | **BL-A3** | **BL-A4** | **BL-A5** |
|---|---|---|---|---|---|---|
| **Komponente** | **Gewichtsteile** | | | | | |
| WÄSSRIGE PHASE | | | | | | |
| Wässrige Lösung von 3% Natrium-Lithium-Magnesium-Schichtsilikatlösung Laponite® RD (Fa. Rockwood Additives) und 3% Pluriol® P900 (Fa. BASF SE) | 22,0 | 22,0 | 22,0 | 22,0 | 22,0 | 22,0 |
| Deionisiertes Wasser | 2,0 | 2,0 | 2,0 | 2,0 | 2,0 | 2,0 |
| Foamstar MF 324 (Fa. Cognis) | **0,7** | **0,0** | **0,0** | **0,0** | **0,0** | **0,0** |
| 1-Octanol (Fa. BASF SE) | **1,5** | **0,0** | **0,0** | **0,0** | **0,0** | **0,0** |
| Deionisiertes Wasser | 2,3 | 2,3 | 2,3 | 2,3 | 2,3 | 2,3 |
| Polyurethanacrylat, hergestellt gemäß Beispiel D, Seite 7-8, der DE 4437535 A1 | 4,6 | 4,6 | 4,6 | 4,6 | 4,6 | 4,6 |
| TMDD 50% BG (Fa. BASF SE), 50%ige Lösung von 2,4,7,9-Tetramethyl-5-decin-4,7-diol (CAS-Nr. 126-86-3) in Butylglykol | 0,9 | 0,9 | 0,9 | 0,9 | 0,9 | 0,9 |
| Polyester, hergestellt gemäß Beispiel D, Seite 10, der DE 4009858 C2 | 1,0 | 1,0 | 1,0 | 1,0 | 1,0 | 1,0 |
| Butylglykol (Fa. BASF SE) | 1,8 | 1,8 | 1,8 | 1,8 | 1,8 | 1,8 |
| Luwipal® 052 (Fa. BASF SE), Melamin-Formaldehyd-Harz | 5,0 | 5,0 | 5,0 | 5,0 | 5,0 | 5,0 |
| TMDD 50% BG (Fa. BASF SE), 50%ige Lösung von 2,4,7,9-Tetramethyl-5-decin-4,7-diol (CAS-Nr. 126-86-3) in Butylglykol | 0,7 | 0,7 | 0,7 | 0,7 | 0,7 | 0,7 |
| 10%ige Lösung von N,N-Dimethylethanolamin (Fa. BASF SE) in Wasser | 0,5 | 0,5 | 0,5 | 0,5 | 0,5 | 0,5 |
| Pluriol® P 900 (Fa. BASF SE), Polypropylenoxid | 0,7 | 0,7 | 0,7 | 0,7 | 0,7 | 0,7 |
| Isopropanol (Fa. BASF SE) | 3,3 | 3,3 | 3,3 | 3,3 | 3,3 | 3,3 |
| Deionisiertes Wasser | 1,0 | 1,0 | 1,0 | 1,0 | 1,0 | 1,0 |
| 3,0%ige Viscalex® HV30 (Fa. BASF SE) - Lösung in Wasser (Rheologie-Modifikator) | 3,0 | 3,0 | 3,0 | 3,0 | 3,0 | 3,0 |
| Deionisiertes Wasser | 1,0 | 1,0 | 1,0 | 1,0 | 1,0 | 1,0 |
| 50,0%ige Lösung von DSX 1550 (Fa. Cognis) in Butylglykol (Rheologiemittel) | 0,4 | 0,4 | 0,4 | 0,4 | 0,4 | 0,4 |
| Deionisiertes Wasser | 1,0 | 1,0 | 1,0 | 1,0 | 1,0 | 1,0 |

| **Komponente** | **Gewich tsteile** | | | | | |
|---|---|---|---|---|---|---|
| Polyurethan - Polyacrylat - Mischpolymerisat | | | | | | |
| gemäß Herstellbeispiel **D-A1** | **15,8** | **15,8** | | | | |
| gemäß Herstellbeispiel **D-A2** | | | **15,9** | | | |
| gemäß Herstellbeispiel **D-A4** | | | | **18,3** | | |
| gemäß Herstellbeispiel **D-A5** | | | | | **14,8** | |
| gemäß Herstellbeispiel **D-A6** | | | | | | **14,8** |
| Deionisiertes Wasser | 0,8 | 1,0 | 1,0 | 0,5 | 1,0 | 1,0 |
| 10%iges Dimethylethanolamin in Wasser | 0,4 | 0,4 | 0,4 | 0,4 | 0,4 | 0,4 |
| TMDD 50% BG (Fa. BASF SE), 50%ige Lösung von 2,4,7,9-Tetramethyl-5-decin-4,7-diol (CAS-Nr. 126-86-3) in Butylglykol | 0,5 | 0,5 | 0,5 | 0,5 | 0,5 | 0,5 |
| Deionisiertes Wasser | 0,0 | 2,0 | 2,0 | 0,0 | 3,0 | 3,0 |
| Isopar L (Fa. ExxonMobile Chemical), Lösungsmittel (isoparafinischer Kohlenwasserstoff) | 2,0 | 2,0 | 2,0 | 2,0 | 2,0 | 2,0 |
| Propanol (Fa. BASF SE) | 0,9 | 0,9 | 0,9 | 0,9 | 0,9 | 0,9 |
| Deionisiertes Wasser | 1,5 | 1,5 | 1,5 | 1,5 | 1,5 | 1,5 |

| ORGANISCHE PHASE | | | | | | |
|---|---|---|---|---|---|---|
| Mischung zweier handelsüblicher Aluminiumpigmente STAPA Hydrolux 1071 Aluminium u. STAPA Hydrolux VP Nr. 56450/G Aluminium (Fa. Eckart Effect Pigments) | 6,5 | 6,5 | 6,5 | 6,5 | 6,5 | 6,5 |
| Butylglykol (Fa. BASF SE) | 8,4 | 8,4 | 8,4 | 8,4 | 8,4 | 8,4 |
| Polyester, hergestellt gemäß Beispiel D, Seite 10, der DE 4009858 C2 | 2,0 | 2,0 | 2,0 | 2,0 | 2,0 | 2,0 |

**Tab. 2b:**

| | | | | |
|---|---|---|---|---|
| **Herstellung von silberfarbenen Wasserbasislacken für die Ermittlung der Nadelstichgrenze und Nadelstichanzahl, sowie der Sichtbarkeit der Schleifkreuze in einer Mehrschichtlackierungen** | | | | |

| **Bezeichnung des Wasserbasislacks** | **BL-B1** | **BL-B2** | **BL-B3** | **BL-B4** |
|---|---|---|---|---|
| **Komponente** | **Gewic htsteile** | | | |
| WÄSSRIGE PHASE | | | | |
| Wässrige Lösung von 3% Natrium-Lithium-Magnesium-Schichtsilikatlösung Laponite® RD (Fa. Rockwood Additives) und 3% Pluriol® P900 (Fa. BASF SE) | 22,0 | 22,0 | 22,0 | 22,0 |
| Deionisiertes Wasser | 2,0 | 2,0 | 2,0 | 2,0 |
| Foamstar MF 324 (Fa. Cognis) | **0,0** | **0,0** | **0,0** | **0,0** |
| 1-Octanol (Fa. BASF SE) | **0,0** | **0,0** | **0,0** | **0,0** |
| Deionisiertes Wasser | 2,3 | 2,3 | 2,3 | 2,3 |
| Polyurethanacrylat, hergestellt gemäß Beispiel D, Seite 7-8, der DE 4437535 A1 | 4,6 | 4,6 | 4,6 | 4,6 |
| TMDD 50% BG (Fa. BASF SE), 50%ige Lösung von 2,4,7,9-Tetramethyl-5-decin-4,7-diol (CAS-Nr. 126-86-3) in Butylglykol | 0,9 | 0,9 | 0,9 | 0,9 |
| Polyester, hergestellt gemäß Beispiel D, Seite 10, der DE 4009858 C2 | 1,0 | 1,0 | 1,0 | 1,0 |
| Butylglykol (Fa. BASF SE) | 1,8 | 1,8 | 1,8 | 1,8 |
| Luwipal® 052 (Fa. BASF SE), Melamin-Formaldehyd-Harz | 5,0 | 5,0 | 5,0 | 5,0 |
| TMDD 50% BG (Fa. BASF SE), 50%ige Lösung von 2,4,7,9-Tetramethyl-5-decin-4,7-diol (CAS-Nr. 126-86-3) in Butylglykol | 0,7 | 0,7 | 0,7 | 0,7 |
| 10%ige Lösung von N,N-Dimethylethanolamin (Fa. BASF SE) in Wasser | 0,5 | 0,5 | 0,5 | 0,5 |
| Pluriol® P 900 (Fa. BASF SE), Polypropylenoxid | 0,7 | 0,7 | 0,7 | 0,7 |
| Isopropanol (Fa. BASF SE) | 3,3 | 3,3 | 3,3 | 3,3 |
| Deionisiertes Wasser | 1,0 | 1,0 | 1,0 | 1,0 |
| 3,0%ige Viscalex® HV30 (Fa. BASF SE) - Lösung in Wasser (Rheologie-Modifikator) | 3,0 | 3,0 | 3,0 | 3,0 |
| Deionisiertes Wasser | 1,0 | 1,0 | 1,0 | 1,0 |
| 50,0%ige Lösung von DSX 1550 (Fa. Cognis) in Butylglykol (Rheologiemittel) | 0,4 | 0,4 | 0,4 | 0,4 |
| Deionisiertes Wasser | 1,0 | 1,0 | 1,0 | 1,0 |

| **Komponente** | **Gewichtsteile** | | | |
|---|---|---|---|---|
| Polyurethan - Polyacrylat - Mischpolymerisat | | | | |
| gemäß Herstellbeispiel **D-B1** | **15,8** | | | |
| gemäß Herstellbeispiel **D-B2** | | **15,8** | | |
| gemäß Herstellbeispiel **D-B4** | | | **18,3** | |
| gemäß Herstellbeispiel **D-B5** | | | | **15,6** |
| Deionisiertes Wasser | 1,0 | 1,0 | 0,5 | 1,0 |
| 10%iges Dimethylethanolamin in Wasser | 0,4 | 0,4 | 0,4 | 0,4 |
| TMDD 50% BG (Fa. BASF SE), 50%ige Lösung von 2,4,7,9-Tetramethyl-5-decin-4,7-diol (CAS-Nr. 126-86-3) in Butylglykol | 0,5 | 0,5 | 0,5 | 0,5 |
| Deionisiertes Wasser | 2,0 | 2,0 | 0,0 | 2,2 |
| Isopar L (Fa. ExxonMobile Chemical), Lösungsmittel (isoparafinischer Kohlenwasserstoff) | 2,0 | 2,0 | 2,0 | 2,0 |
| Propanol (Fa. BASF SE) | 0,9 | 0,9 | 0,9 | 0,9 |
| Deionisiertes Wasser | 1,5 | 1,5 | 1,5 | 1,5 |

| ORGANISCHE PHASE | | | | |
|---|---|---|---|---|
| Mischung zweier handelsüblicher Aluminiumpigmente STAPA Hydrolux 1071 Aluminium u. STAPA Hydrolux VP Nr. 56450/G Aluminium (Fa. Eckart Effect Pigments) | 6,5 | 6,5 | 6,5 | 6,5 |
| Butylglykol (Fa. BASF SE) | 8,4 | 8,4 | 8,4 | 8,4 |
| Polyester, hergestellt gemäß Beispiel D, Seite 10, der DE 4009858 C2 | 2,0 | 2,0 | 2,0 | 2,0 |

**Tab.3a:**

| | | | | | | | |
|---|---|---|---|---|---|---|---|
| **Herstellung von silberfarbenen Wasserbasislacken für die Ermittlung des Gitterschnitts** | | | | | | | |

| **Bezeichnung des Wasserbasislacks** | **BL-C1** | **BL-C2** | **BL-C3** | **BL-C4** | **BL-C5** | **BL-C6** | **BL-C7** |
|---|---|---|---|---|---|---|---|
| **Komponente** | **Gewichtsteile** | | | | | | |
| WÄSSRIGE PHASE | | | | | | | |
| Wässrige Lösung von 3% Natrium-Lithium-Magnesium-Schichtsilikatlösung Laponite® RD (Fa. Rockwood Additives) und 3% Pluriol® P900 (Fa. BASF SE) | 20,0 | 20,0 | 20,0 | 20,0 | 20,0 | 20,0 | 20,0 |
| Deionisiertes Wasser | 6,2 | 6,2 | 6,2 | 6,2 | 6,2 | 6,2 | 6,2 |
| Polyurethanacrylat, hergestellt gemäß Beispiel D, Seite 7-8, der DE 4437535 A1 | 4,9 | 4,9 | 4,9 | 4,9 | 4,9 | 4,9 | 4,9 |
| TMDD 50% BG (Fa. BASF SE), 50%ige Lösung von 2,4,7,9-Tetramethyl-5-decin-4,7-diol (CAS-Nr. 126-86-3) in Butylglykol | 0,9 | 0,9 | 0,9 | 0,9 | 0,9 | 0,9 | 0,9 |
| Butylglykol (Fa. BASF SE) | 0,8 | 0,8 | 0,8 | 0,8 | 0,8 | 0,8 | 0,8 |
| Luwipal® 052 (Fa. BASF SE), Melamin-Formaldehyd-Harz | 5,7 | 5,7 | 5,7 | 5,7 | 5,7 | 5,7 | 5,7 |
| TMDD 50% BG (Fa. BASF SE), 50%ige Lösung von 2,4,7,9-Tetramethyl-5-decin-4,7-diol (CAS-Nr. 126-86-3) in Butylglykol | 0,8 | 0,8 | 0,8 | 0,8 | 0,8 | 0,8 | 0,8 |
| 10%ige Lösung von N,N-Dimethylethanolamin (Fa. BASF SE) in Wasser | 0,6 | 0,6 | 0,6 | 0,6 | 0,6 | 0,6 | 0,6 |
| Pluriol® P 900 (Fa. BASF SE), Polypropylenoxid | 0,8 | 0,8 | 0,8 | 0,8 | 0,8 | 0,8 | 0,8 |
| Deionisiertes Wasser | 2,2 | 2,2 | 2,2 | 2,2 | 2,2 | 2,2 | 2,2 |
| 3,0%ige Viscalex® HV30 (Fa. BASF SE) - Lösung in Wasser (Rheologie-Modifikator) | 3,0 | 3,0 | 3,0 | 3,0 | 3,0 | 3,0 | 3,0 |
| Deionisiertes Wasser | 1,1 | 1,1 | 1,1 | 1,1 | 1,1 | 1,1 | 1,1 |
| 50,0%ige Lösung von DSX 1550 (Fa. Cognis) in Butylglykol (Rheologiemittel) | 0,2 | 0,2 | 0,2 | 0,2 | 0,2 | 0,2 | 0,2 |
| Deionisiertes Wasser | 1,1 | 1,1 | 1,1 | 1,1 | 1,1 | 1,1 | 1,1 |

**Tab.3b:**

| | | | | | | | |
|---|---|---|---|---|---|---|---|
| **Herstellung von silberfarbenen Wasserbasislacken für die Ermittlung des Gitterschnitts** | | | | | | | |

| **Bezeichnung des Wasserbasislacks** | **BL-C1** | **BL-C2** | **BL-C3** | **BL-C4** | **BL-C5** | **BL-C6** | **BL-C7** |
|---|---|---|---|---|---|---|---|
| **Komponente** | **Gewichtsteile** | | | | | | |
| Polyu rethan-Polyacrylat -Mischpolymerisat | | | | | | | |
| gemäß Herstellbeispiel **D-A1** | **18,8** | | | | | | |
| gemäß Herstellbeispiel **D-A2** | | **19,0** | | | | | |
| gemäß Herstellbeispiel **D-A4** | | | **21,8** | | | | |
| gemäß Herstellbeispiel **D-B1** | | | | **18,8** | | | |
| gemäß Herstellbeispiel **D-B2** | | | | | **18,9** | | |
| gemäß Herstellbeispiel **D-B4** | | | | | | **21,7** | |
| gemäß Herstellbeispiel **D-C1** | | | | | | | **18,6** |
| Deionisiertes Wasser | 1,1 | 1,0 | 0,0 | 1,1 | 1,1 | 0,0 | 1,3 |
| 10%iges Dimethylethanolamin in Wasser | 0,5 | 0,5 | 0,5 | 0,5 | 0,5 | 0,5 | 0,5 |
| Isopar L (Fa. ExxonMobile Chemical), Lösungsmittel (isoparafinischer Kohlenwasserstoff) | 2,1 | 2,1 | 2,1 | 2,1 | 2,1 | 2,1 | 2,1 |
| Deionisiertes Wasser | 5,0 | 5,0 | 3,2 | 5,0 | 5,0 | 3,2 | 5,0 |

| ORGANISCHE PHASE | | | | | | | |
|---|---|---|---|---|---|---|---|
| Mischung zweier handelsüblicher Aluminiumpigmente STAPA Hydrolux 1071 Aluminium u. STAPA Hydrolux VP Nr. 56450/G Aluminium (Fa. Eckart Effect Pigments) | 5,6 | 5,6 | 5,6 | 5,6 | 5,6 | 5,6 | 5,6 |
| Butylglykol (Fa. BASF SE) | 6,6 | 6,6 | 6,6 | 6,6 | 6,6 | 6,6 | 6,6 |
| Mischlack, hergestellt nach Herstellbeispiel 1 der WO 2006/040284 A1 (Seite 14, Zeile 15-27), It. Herstellbeispiel 1 bestehend aus einem Propfmischpolymerisat, deionisiertem Wasser, Surfynol® 100 (Fa. Air Products), Hydropalat® 3037(Fa. Cognis, ein Polyoxylenderivat von Rizinusöl) und 1-Propoxy-2-propanol | 5,5 | 5,5 | 5,5 | 5,5 | 5,5 | 5,5 | 5,5 |

### Vergleichsversuche zwischen den Wasserbasislacken BL-A0 bis BL-A5 mit den erfindungsgemäßen Wasserbasislacken BL-B1 bis BL-B4 in Hinblick auf Nadelstichgrenze, Nadelstichanzahl und Sichtbarkeit der Schleifkreuze in Mehrschichtlackierungen

Zur Bestimmung der Nadelstichgrenze, der Nadelstichanzahl und des Schleifriefenabdeckungsvermögens wurden Mehrschichtlackierungen mit den Wasserbasislacken BL-A0 bis BL-B4 untersucht.
Während Wasserbasislack BL-A0 Foamstar MF 324 (Fa. Cognis) und 1-Octanol (Fa. BASF SE) enthielt, waren alle weiteren Wasserbasislacke BL-A1 bis BL-B4 frei von diesen beiden Komponenten.
Zur Bestimmung der Nadelstichgrenze und der Nadelstichanzahl wurden die Mehrschichtlackierungen mit den Wasserbasislacken nach der folgenden allgemeinen Vorschrift hergestellt:
Ein mit einer Füllerlackierung beschichtetes Stahlblech der Abmessungen 30 cm x 50 cm wurde an einer Längskante mit einem Klebstreifen versehen, um nach der Beschichtung die Schichtdickendifferenzen ermitteln zu können. Der Wasserbasislack wurde keilförmig elektrostatisch appliziert. Die resultierende Wasserbasislackschicht wurde während einer Minute bei Raumtemperatur abgelüftet und anschließend während 10 Minuten im Umluftofen bei 70°C getrocknet. Auf die getrocknete Wasserbasislackschicht wurde ein üblicher Zweikomponentenklarlack appliziert. Die resultierende Klarlackschicht wurde während 20 Minuten bei Raumtemperatur abgelüftet. Anschließend wurden Wasserbasislackschicht und Klarlackschicht in einem Umluftofen während 20 Minuten bei 140°C gemeinsam gehärtet. Die Schichtdicke der gehärteten Klarlackschicht war über das gesamte Blech konstant (± 1 µm) bei einer Klarlackschichtdicke von 38 bis 42 µm.
Nach der visuellen Auswertung der Nadelstiche in der resultierenden keilförmigen Mehrschichtlackierung wurde die Schichtdicke der Nadelstichgrenze bestimmt.

Desweiteren wurde das Schleifriefenabdeckungsvermögen verglichen:
Dazu wurde ein Coilblech der Abmessungen 30 x 60 cm mit einem Füller lackiert und der Füller bei 160°C über einen Zeitraum von 20 Minuten eingebrannt. Auf diesem Blech wurde ein Schleifkreuz mittels eines Schleifpapieres, das 800 Partikel pro cm² auf der Oberfläche besitzt, aufgebracht, welches eine Tiefe von 2-4 µm und eine Furchenbreite von 2 cm aufwies. Anschließend wurde der entsprechende Basislack mit einer Schichtdicke von 8-12 µm appliziert. Anschließend wurde das resultierende Blech 10 Minuten bei 80°C getrocknet, und auf die getrocknete Wasserbasislackschicht wurde ein üblicher und bekannter Zweikomponentenklarlack appliziert. Anschließend wurden die Wasserbasislackschicht und Klarlackschicht in einem Umluftofen während 20 Minuten bei 140°C gemeinsam gehärtet.
Die Sichtbarkeit des Schleifkreuzes in der Mehrschichtlackierung wurde visuell bestimmt und auf einer Skala von 1 bis 5 beurteilt. Dabei geben hohe Zahlenwerte eine gute Sichtbarkeit des Schleifkreuzes und niedrige Zahlenwerte eine gute Abdeckung der Schleifkreuze an.

Die Tabellen 4 und 5 geben einen Überblick über die Ergebnisse der Bestimmung der Nadelstichgrenze, der Nadelstichanzahl und des Schleifriefenabdeckungsvermögens der Mehrschichtlackierungen:

**Tab. 4:**

| | | | | | | | |
|---|---|---|---|---|---|---|---|
| **Ergebnisse der Bestimmung der Nadelstichgrenze, der Nadelstichanzahl und des Schleifriefenabdeckungsvermögens der Mehrschichtlackierungen auf Basis der Wasserbasislacke BL-A0 bis BL-A3 und BL-B1 bis BL-B3** | | | | | | | |

| Wasserbasislack | BL-A0 | BL-A1 | BL-A2 | BL-A3 | BL-B1 | BL-B2 | BL-B3 |
|---|---|---|---|---|---|---|---|
| Polyurethandispersion | D-P1 | D-P1 | D-P2 | D-P1 | D-P1 | D-P2 | D-P1 |
| Mischpolymerisat | D-A1 | D-A1 | D-A2 | D-A4 | D-B1 | D-B2 | D-B4 |
| Foamstar MF324 / 1-Octanol | Ja | Nein | Nein | Nein | Nein | Nein | Nein |
| Nadelstichgrenze / 10⁻⁶ m | 16 | 9 | 10 | 16 | 21 | 21 | 19 |
| Nadelstichzahl | 17 | 127 | 145 | 101 | 11 | 7 | 23 |
| Sichtbarkeit des Schleifriefenkreuzes | 4 | 4 | 4 | 4 | 3 | 3 | 3 |

**Tab. 5:**

| Wasserbasislack | BL-A4 | BL-A5 | BL-B4 |
|---|---|---|---|
| Polyurethandispersion | D-P4 | D-P4 | D-P4 |
| Mischpolymerisat | D-A5 | D-A6 | D-B5 |
| Nadelstichgrenze / 10⁻⁶ m | 14 | 17 | 27 |
| Nadelstichzahl | >200 | >200 | 90 |
| Sichtbarkeit des Schleifriefenkreuzes | 4 | 4 | 3 |

### Vergleichsversuche zwischen den Wasserbasislack BL-C1 bis BL-C3 und den erfindungsgemäßen Wasserbasislacken BL-C4 bis BL-C7 in Hinblick auf die Verbesserung der Gitterschnitt-Ergebnisse

Zur Bestimmung des Gitterschnitts wurden Mehrschichtlackierungen mit den Vergleichswasserbasislacken BL-C1 bis BL-C3 und den erfindungsgemäßen Wasserbasislacken BL-C4 bis BL-C7 untersucht.

Dazu diente ein Blech der Abmessungen 10 cm x 20 cm, welches eine Füllerlackierung eines handelsüblichen Füllers aufwies, als Substrat. Bei der Herstellung dieses Substrats wurde der Füller über einen Zeitraum von 10 min bei 80°C zwischengetrocknet und anschließend über einen Zeitraum von 30 min bei 190 °C eingebrannt.

Auf dieses Blech wurde zunächst jeweils ein Basislack gemäß Tabelle 6 pneumatisch appliziert. Nach 1 min Ablüften des Basislacks bei Raumtemperatur wurden der Basislack über 10 min bei 70 °C im Umluftofen zwischengetrocknet. Anschließend wurde der von der BASF kommerziell erhältliche 2-Komponenten-Klarlack FF99-0345 ebenfalls pneumatisch appliziert und nach 20 min Ablüften bei Raumtemperatur die beiden Schichten bei einer Temperatur von 160 °C über einen Zeitraum von 30 min eingebrannt. Es resultierte eine überbrannte Mehrschichtlackierung.

Nach Abkühlen der überbrannten Mehrschichtlackierung wurden die Lackierungen angeschliffen. Anschließend wurde der jeweilige Basislack gemäß Tabelle 3 pneumatisch appliziert. Nach 1 min Ablüften des Basislacks bei Raumtemperatur wurde der Basislack über 10 min bei 70 °C im Umluftofen zwischengetrocknet. Anschließend wurde der von der BASF kommerziell erhältliche 2-Komponenten-Reparatur-Klarlack aus FF23-0500 und SC29-0093 pneumatisch appliziert und nach 20 min Ablüften bei Raumtemperatur die beiden Schichten bei einer Temperatur von 80 °C über einen Zeitraum von 30 min eingebrannt. Es resultierte eine Reparaturlackierung.

An der unterbrannten Reparaturlackierung auf angeschliffener, überbrannter Mehrschichtlackierung wurde die Haftung durch Gitterschnitttest untersucht.

Der Gitterschnitttest wurde nach DIN 2409 durchgeführt. Die Beurteilung der Ergebnisse des Gitterschnitttests wurde nach DIN EN ISO 2409 durchgeführt.

Tabelle 6 gibt einen Überblick über die Ergebnisse der Gitterschnitttests bei Vergleich der verschiedenen Wasserbasislacke:

**Tab. 6:**

| | | | | | | | |
|---|---|---|---|---|---|---|---|
| **Ergebnisse des Gitterschnitttests an einer Reparaturlackierung auf überbrannter Mehrschichtlackierung auf Basis der Wasserbasislacks BL-C1 bis BL-C3 im Vergleich zu den erfindungsgemäßen Wasserbasislacken BL-C4 bis BL-C7** | | | | | | | |

| Wasserbasislack | BL-C1 | BL-C2 | BL-C3 | BL-C4 | BL-C5 | BL-C6 | BL-C7 |
|---|---|---|---|---|---|---|---|
| Polyurethandispersion | D-P1 | D-P2 | D-P1 | D-P1 | D-P1 | D-P2 | D-P3 |
| Mischpolymerisat | D-A1 | D-A2 | D-A4 | D-B1 | D-B2 | D-B4 | D-C1 |
| Gitterschnitt (Note) | 4 | 4 | 4 | 2,5 | 2,5 | 2,5 | 1 |

## Patentansprüche

1. Wässrige Dispersion, enthaltend mindestens ein Mischpolymerisat, wobei das Mischpolymerisat herstellbar ist, durch
(i) Vorlage einer wässrigen Dispersion mindestens eines Polyurethans, und anschließend
(ii) Polymerisation einer Mischung von olefinisch ungesättigten Monomeren in Gegenwart des Polyurethans aus (i),
wobei
(a) ein wasserlöslicher Initiator verwendet wird,
(b) die Zudosierung der olefinisch ungesättigten Monomere so erfolgt, dass in der Reaktionslösung eine Konzentration von 6,0 Gew.-%, bezogen auf die Gesamtmenge an olefinisch ungesättigten Monomeren, während der gesamten Reaktionsdauer nicht überschritten wird, und
(c) die Mischung der olefinisch ungesättigten Monomere mindestens ein mehrfach olefinisch ungesättigtes Monomer enthält.

2. Wässrige Dispersion gemäß Anspruch 1, **dadurch gekennzeichnet, dass** die Zudosierung der olefinisch ungesättigten Monomere so erfolgt, dass in der Reaktionslösung eine Konzentration von 5,0 Gew.-%, bezogen auf die Gesamtmenge an olefinisch ungesättigten Monomeren, während der gesamten Reaktionsdauer nicht überschritten wird.

3. Wässrige Dispersion gemäß Anspruch 2, **dadurch gekennzeichnet, dass** die Zudosierung der olefinisch ungesättigten Monomere so erfolgt, dass in der Reaktionslösung eine Konzentration von 4,0 Gew.-%, bezogen auf die Gesamtmenge an olefinisch ungesättigten Monomeren, während der gesamten Reaktionsdauer nicht überschritten wird.

4. Wässrige Dispersion gemäß einem der Ansprüche 1-3, **dadurch gekennzeichnet, dass** die Mischung der olefinisch ungesättigten Monomere 0,1 bis 6,0 mol-% mehrfach olefinisch ungesättigtes Monomere enthält.

5. Wässrige Dispersion gemäß einem der Ansprüche 1-4, **dadurch gekennzeichnet, dass** die Mischung der olefinisch ungesättigten Monomere 0,1 bis 2,0 mol-% mehrfach olefinisch ungesättigtes Monomere enthält.

6. Wässrige Dispersion gemäß einem der Ansprüche 4-5, **dadurch gekennzeichnet, dass** die Mischung der olefinisch ungesättigten Monomere 0,1 bis 6,0 mol-% Allylmethacrylat enthält und keine weiteren mehrfach olefinisch ungesättigten Monomere enthalten sind.

7. Wässrige Dispersion gemäß einem der Ansprüche 1-6, **dadurch gekennzeichnet, dass** die Mischung der olefinisch ungesättigten Monomere 0,1 bis 2,0 mol-% Allylmethacrylat enthält und keine weiteren mehrfach olefinisch ungesättigten Monomere enthalten sind.

8. Wässrige Dispersion gemäß einem der Ansprüche 1-7, **dadurch gekennzeichnet, dass** die Mischung von olefinisch ungesättigten Monomeren < 10,0 Gew.-% vinylaromatische Monomere, bezogen auf die Gesamtmenge an olefinisch ungesättigten Monomeren enthält.

9. Wässrige Dispersion gemäß einem der Ansprüche 1-8, **dadurch gekennzeichnet, dass** die Mischung von olefinisch ungesättigten Monomeren < 5,0 Gew.-% vinylaromatische Monomere, bezogen auf die Gesamtmenge an olefinisch ungesättigten Monomeren enthält.

10. Wässrige Dispersion gemäß einem der Ansprüche 1-9, **dadurch gekennzeichnet, dass** die Mischung von olefinisch ungesättigten Monomeren keine vinylaromatischen Monomere enthält.

11. Wässrige Dispersion gemäß einem der Ansprüche 1-10, **dadurch gekennzeichnet, dass** die wässrige Dispersion einen Gelanteil von 40 bis 90 Gew-%, bezogen auf den Festkörper der Dispersion, hat.

12. Wässrige Dispersion gemäß einem der Ansprüche 1-11, wobei das Mischpolymerisat mindestens
(A) einen Kern, enthaltend mindestens ein Polyurethan, enthält und
(B)eine Schale, enthaltend mindestens ein Polymer welches durch Polymerisation von olefinisch ungesättigten Monomeren erhalten wurde, enthält.

13. Verwendung einer wässrigen Dispersion gemäß einem der Ansprüche 1-12 zur Herstellung von Lacken.

14. Wässriger Basislack, **dadurch gekennzeichnet, dass** eine wässrige Dispersion gemäß einem der Ansprüche 1-12 enthalten ist.

15. Verfahren zur Herstellung einer farb- und/oder effektgebenden mehrschichtigen Lackierung, bei dem
(i) ein pigmentierter wässriger Basislack auf ein Substrat aufgebracht wird,
(ii)aus dem in Stufe (a) aufgebrachten Lack ein Polymerfilm gebildet wird,
(iii) auf die so erhaltene Basislackschicht ein Klarlack aufgebracht wird und anschließend
(iv) die Basislackschicht zusammen mit der Klarlackschicht gehärtet wird
**dadurch gekennzeichnet, dass** in Stufe (a) ein pigmentierter wässriger Basislack eingesetzt wird, wobei der Basislack eine wässrige Dispersion gemäß einem der Ansprüche 1-12 enthält.

16. Verwendung eines wässrigen Basislacks gemäß Anspruch 15 zur Beschichtung von Automobilkarossen und/oder Anbauteilen von Automobil karossen aus Kunststoff.

17. Verfahren zur Herstellung einer wässrigen Dispersion, **gekennzeichnet durch** die Herstellungsschritte:
(i) Vorlage einer wässrigen Dispersion mindestens eines Polyurethans, und anschließend
(ii) Polymerisation einer Mischung von olefinisch ungesättigten Monomeren in Gegenwart des Polyurethans aus (i),
wobei
(a) ein wasserlöslicher Initiator verwendet wird,
(b) die Zudosierung der olefinisch ungesättigten Monomere so erfolgt, dass in der Reaktionslösung eine Konzentration von 6,0 Gew.-%, bezogen auf die Gesamtmenge an olefinisch ungesättigten Monomeren, während der gesamten Reaktionsdauer nicht überschritten wird, und
(c) die Mischung der olefinisch ungesättigten Monomere mindestens ein mehrfach olefinisch ungesättigtes Monomer enthält.

## Claims

1. Aqueous dispersion comprising at least one copolymer, the copolymer being preparable by
(i) initially charging an aqueous dispersion of at least one polyurethane, and then
(ii) polymerizing a mixture of olefinically unsaturated monomers in the presence of the polyurethane from (i),
where
(a) a water-soluble initiator is used,
(b) the metered addition of the olefinically unsaturated monomers is effected such that a concentration of 6.0% by weight, based on the total amount of olefinically unsaturated monomers, in the reaction solution is not exceeded over the entire duration of the reaction, and
(c) the mixture of the olefinically unsaturated monomers comprises at least one polyolefinically unsaturated monomer.

2. Aqueous dispersion according to Claim 1, **characterized in that** the metered addition of the olefinically unsaturated monomers is effected such that a concentration of 5.0% by weight, based on the total amount of olefinically unsaturated monomers, in the reaction solution is not exceeded over the entire duration of the reaction.

3. Aqueous dispersion according to Claim 2, **characterized in that** the metered addition of the olefinically unsaturated monomers is effected such that a concentration of 4.0% by weight, based on the total amount of olefinically unsaturated monomers, in the reaction solution is not exceeded over the entire duration of the reaction.

4. Aqueous dispersion according to any of Claims 1-3, **characterized in that** the mixture of the olefinically unsaturated monomers contains 0.1 to 6.0 mol% of polyolefinically unsaturated monomers.

5. Aqueous dispersion according to any of Claims 1-4, **characterized in that** the mixture of the olefinically unsaturated monomers contains 0.1 to 2.0 mol% of polyolefinically unsaturated monomers.

6. Aqueous dispersion according to any of Claims 4-5, **characterized in that** the mixture of the olefinically unsaturated monomers contains 0.1 to 6.0 mol% of allyl methacrylate and does not contain any further polyolefinically unsaturated monomers.

7. Aqueous dispersion according to any of Claims 1-6, **characterized in that** the mixture of the olefinically unsaturated monomers contains 0.1 to 2.0 mol% of allyl methacrylate and does not contain any further polyolefinically unsaturated monomers.

8. Aqueous dispersion according to any of Claims 1-7, **characterized in that** the mixture of olefinically unsaturated monomers contains < 10.0% by weight of vinylaromatic monomers, based on the total amount of olefinically unsaturated monomers.

9. Aqueous dispersion according to any of Claims 1-8, **characterized in that** the mixture of olefinically unsaturated monomers contains < 5.0% by weight of vinylaromatic monomers, based on the total amount of olefinically unsaturated monomers.

10. Aqueous dispersion according to any of Claims 1-9, **characterized in that** the mixture of olefinically unsaturated monomers does not contain any vinylaromatic monomers.

11. Aqueous dispersion according to any of Claims 1-10, **characterized in that** the aqueous dispersion has a gel content of 40 to 90% by weight, based on the solids in the dispersion.

12. Aqueous dispersion according to any of Claims 1-11, wherein the copolymer contains at least
(A) a core comprising at least one polyurethane, and
(B) a shell comprising at least one polymer which has been obtained by polymerization of olefinically unsaturated monomers.

13. Use of an aqueous dispersion according to any of Claims 1-12 for production of coating materials.

14. Waterborne basecoat, **characterized in that** an aqueous dispersion according to any of Claims 1-12 is present.

15. Process for producing a multicoat color and/or effect paint system, in which
(i) a pigmented waterborne basecoat is applied to a substrate,
(ii) a polymer film is formed from the coating material applied in stage (a),
(iii) a clearcoat is applied to the basecoat layer thus obtained and then
(iv) the basecoat layer is cured together with the clearcoat layer,
**characterized in that**, in stage (a), a pigmented waterborne basecoat is used, said basecoat comprising an aqueous dispersion according to any of Claims 1-12.

16. Use of a waterborne basecoat according to Claim 15 for coating of automobile bodies and/or plastic parts for installation on automobile bodies.

17. Process for producing an aqueous dispersion, **characterized by** the production steps of:
(i) initially charging an aqueous dispersion of at least one polyurethane, and then
(ii) polymerizing a mixture of olefinically unsaturated monomers in the presence of the polyurethane from (i),
where
(a) a water-soluble initiator is used,
(b) the metered addition of the olefinically unsaturated monomers is effected such that a concentration of 6.0% by weight, based on the total amount of olefinically unsaturated monomers, in the reaction solution is not exceeded over the entire duration of the reaction, and
(c) the mixture of the olefinically unsaturated monomers comprises at least one polyolefinically unsaturated monomer.

## Revendications

1. Dispersion aqueuse, contenant au moins un copolymère, le copolymère pouvant être préparé par
(i) la mise à disposition d'une dispersion aqueuse d'au moins un polyuréthane, et ensuite
(ii) la polymérisation d'un mélange de monomères oléfiniquement insaturés en présence du polyuréthane de (i),
(a) un initiateur soluble dans l'eau étant utilisé,
(b) le dosage des monomères oléfiniquement insaturés étant réalisé de telle façon, qu'une concentration de 6,0 % en poids dans la solution de réaction, par rapport à la quantité totale de monomères oléfiniquement insaturés, n'est pas dépassée pendant la durée totale de réaction, et
(c) le mélange des monomères oléfiniquement insaturés contenant au moins un monomère oléfiniquement polyinsaturé.

2. Dispersion aqueuse selon la revendication 1, **caractérisée en ce que** le dosage des monomères oléfiniquement insaturés est réalisé de telle façon, qu'une concentration de 5,0 % en poids dans la solution de réaction, par rapport à la quantité totale de monomères oléfiniquement insaturés, n'est pas dépassée pendant la durée totale de réaction.

3. Dispersion aqueuse selon la revendication 2, **caractérisée en ce que** le dosage des monomères oléfiniquement insaturés est réalisé de telle façon, qu'une concentration de 4,0 % en poids dans la solution de réaction, par rapport à la quantité totale de monomères oléfiniquement insaturés, n'est pas dépassée pendant la durée totale de réaction.

4. Dispersion aqueuse selon l'une quelconque des revendications 1 à 3, **caractérisée en ce que** le mélange des monomères oléfiniquement insaturés contient 0,1 à 6,0 % en moles de monomères oléfiniquement polyinsaturés.

5. Dispersion aqueuse selon l'une quelconque des revendications 1 à 4, **caractérisée en ce que** le mélange des monomères oléfiniquement insaturés contient 0,1 à 2,0 % en moles de monomères oléfiniquement polyinsaturés.

6. Dispersion aqueuse selon l'une quelconque des revendications 4 et 5, **caractérisée en ce que** le mélange des monomères oléfiniquement insaturés contient 0,1 à 6,0 % en moles de méthacrylate d'allyle et ne contient pas d'autres monomères oléfiniquement polyinsaturés.

7. Dispersion aqueuse selon l'une quelconque des revendications 1 à 6, **caractérisée en ce que** le mélange des monomères oléfiniquement insaturés contient 0,1 à 6,0 % en moles de méthacrylate d'allyle et ne contient pas d'autres monomères oléfiniquement polyinsaturés.

8. Dispersion aqueuse selon l'une quelconque des revendications 1 à 7, **caractérisée en ce que** le mélange de monomères oléfiniquement insaturés contient < 10,0 % en poids de monomères aromatiques vinyliques, par rapport à la quantité totale de monomères oléfiniquement insaturés.

9. Dispersion aqueuse selon l'une quelconque des revendications 1 à 8, **caractérisée en ce que** le mélange de monomères oléfiniquement insaturés contient < 5,0 % en poids de monomères aromatiques vinyliques, par rapport à la quantité totale de monomères oléfiniquement insaturés.

10. Dispersion aqueuse selon l'une quelconque des revendications 1 à 9, **caractérisée en ce que** le mélange de monomères oléfiniquement insaturés ne contient pas de monomères aromatiques vinyliques.

11. Dispersion aqueuse selon l'une quelconque des revendications 1 à 10, **caractérisée en ce que** la dispersion aqueuse possède une teneur en gel de 40 à 90 % en poids, par rapport au solide de la dispersion.

12. Dispersion aqueuse selon l'une quelconque des revendications 1 à 11, le copolymère contenant au moins
(A) un noyau, contenant au moins un polyuréthane, et
(B) une enveloppe, contenant au moins un polymère, qui a été obtenu par polymérisation de monomères oléfiniquement insaturés.

13. Utilisation d'une dispersion aqueuse selon l'une quelconque des revendications 1 à 12 pour la préparation de vernis.

14. Vernis de base aqueux, **caractérisé en ce qu'**il contient une dispersion aqueuse selon l'une quelconque des revendications 1 à 12.

15. Procédé pour la préparation d'une peinture multicouche colorante ou à effets, dans lequel
(i) un vernis de base pigmenté aqueux est appliqué sur un substrat,
(ii) un film de polymère est formé à partir du vernis appliqué dans l'étape (a),
(iii) un vernis transparent est appliqué sur la couche de vernis de base ainsi obtenue et ensuite
(iv) la couche de vernis de base est durcie ensemble avec la couche de vernis transparent
**caractérisé en ce qu'**un vernis de base pigmenté aqueux est utilisé dans l'étape (a), le vernis de base contenant une dispersion aqueuse selon l'une quelconque des revendications 1 à 12.

16. Utilisation d'un vernis de base aqueux selon la revendication 15 pour le revêtement de carrosseries automobiles et/ou d'accessoires de carrosseries automobiles en plastique.

17. Procédé pour la préparation d'une dispersion aqueuse, **caractérisé par** les étapes de préparation :
(i) mise à disposition d'une dispersion aqueuse d'au moins un polyuréthane, et ensuite
(ii) polymérisation d'un mélange de monomères oléfiniquement insaturés en présence du polyuréthane de (i),
(a) un initiateur soluble dans l'eau étant utilisé,
(b) le dosage des monomères oléfiniquement insaturés étant réalisé de telle façon, qu'une concentration de 6,0 % en poids dans la solution de réaction, par rapport à la quantité totale de monomères oléfiniquement insaturés, n'est pas dépassée pendant la durée totale de réaction, et
(c) le mélange des monomères oléfiniquement insaturés contenant au moins un monomère oléfiniquement polyinsaturé.
